# EUROPEAN PATENT APPLICATION

(11) **EP 1 853 074 A1**
(43) Date of publication of application: **07.11.2007**
(21) Application number: 06712936.1
(22) Date of filing: 02.02.2006
(51) Int. Cl.: H04Q 7/22, H04J 11/00, H04J 13/00

(54) **WIRELESS COMMUNICATION TERMINAL AND HANDOVER CONTROL METHOD**

(30) Priority: 03.02.2005 JP 2005027769; 18.01.2006 JP 2006010045
(71) Applicant: KABUSHIKI KAISHA TOSHIBA, Tokyo 105-8001 (JP)
(72) Inventor: DEGUCHI, Noritaka c/o Toshiba Corporation, Minato-ku, Tokyo 105-8001 (JP)
(74) Representative: Maury, Richard Philip
(86) International application number: PCT/JP2006/301793
(87) International publication number: WO 2006/082904

(57) **Abstract**

A Radio communication terminal receives orthogonal frequency division multiplexing (OFDM) signals transmitted from a plurality of base stations respectively, detects a symbol timing of each of the OFDM signals received by the receiving unit, measures a reception condition of each of the OFDM signals received by the receiving unit. A controller (7) selects, from the base stations, a first base station whose reception condition is the best among the reception conditions, selects, from remaining base stations other than the first base station of the base stations, a second base station which is such that a symbol timing difference between the symbol timing of the second base station and that of the first base station is within a given first time period, and notifies identifications of the first and the second base station to the base stations.

## Description

### Technical Field

The present invention relates to a radio communication terminal and a hand-over control method, and particularly, relates to a hand-over control method using an orthogonal frequency division multiplexing (OFDM) system.

### Background Art

The use of the OFDM system as a communication system enables a radio communication terminal to perform hand-over which simultaneously or selectively receives radio signals transmitted from a plurality of base stations. A method for receiving the radio signals simultaneously is referred to as soft hand-over and a method for receiving the radio signals selectively is referred to as site selection diversity.

In general, in case where the OFDM system is used a part of a transmission symbol is added thereto as a guard interval in order to reduce influences between symbols caused by multi-path. With this characteristic, if receiving timing of each radio signal transmitted from each of pluralities of base stations is settled within each guard interval period, the communication terminal can easily receive each radio signal simultaneously. However, if each of the receiving timings exceeds each of the guard interval periods, each radio signal interferes with one another, so that it has been hard for the radio communication terminal to perform the soft hand-over in specific.

Based on such a background, a conventional technology which is a soft hand-over control method applied to the OFDM system, synchronizes each base station one another. This technology is implemented in a manner that each base station cooperates with one another, or a base station control apparatus adjusts transmission times of a plurality of base stations under its control and uses a global positioning system (GPS). Thereby, the receiving timings for each radio signal transmitted from the plurality of base stations at the radio communication terminal are settled within the guard interval periods, respectively, and as a result, the soft hand-over becomes possible [refer to, for example, seventh page in Japanese patent application publication (KOKAI) No. 11-178036].

However, although the above-mentioned conventional technology is a method for synchronizing each base station by means of cooperation with one another or the like, it has been difficult to control with high accuracy the receiving timings at each radio communication terminal for each radio signal transmitted from the plurality of base stations because of overheads required by the cooperation or influences of radio communication paths between the base stations and the radio communication terminals. The construction of a radio communication system with non-synchronization among base stations presents the problem such that the above-described conventional technology cannot be applied thereto.

### Disclosure of Invention

The present invention is invented in order to solve the above-mentioned problems. An object of the present invention is to provide a radio communication terminal, a hand-over control method and a radio communication system configured to achieve hand-over though easy control even when base stations are not synchronized with one another when the OFDM system is adopted.

According to embodiments of the present invention, a Radio communication terminal receives orthogonal frequency division multiplexing (OFDM) signals transmitted from a plurality of base stations respectively; detects symbol timings of the OFDM signals received by the receiving unit respectively; measures reception conditions of the OFDM signals received by the receiving unit respectively; selects a first base station whose reception condition is the best among the reception conditions; selects, from remaining base stations other than the first base station of the base stations, a second base station which is such that a symbol timing difference between the symbol timing of the second base station and that of the first base station is within a given first time period; and notifies identifications of the first and the second base station to the base stations.

### Brief Description of Drawings

FIG. 1 is a diagram for explaining a hand-over state in embodiments of the present invention.
FIG. 2 is a diagram for explaining soft hand-over.
FIG. 3 is a diagram for explaining hard hand-over.
FIG. 4 is a diagram showing a configuration example of a base station in a first embodiment.
FIG. 5 is a diagram showing an example of a format of a downlink radio channel.
FIG. 6 is a diagram showing another example of the format of the downlink radio channel.
FIG. 7 is a diagram showing a configuration example of a radio communication terminal in a first embodiment.
FIG. 8A is a diagram showing an example of a format of an uplink radio channel.
FIG. 8B is a diagram showing an example of a method for notifying ID of base station being selected by use of the uplink radio channel.
FIG. 9A is a diagram showing a table that shows ID of each base station notified to radio communication terminal.
FIG. 9B is a diagram showing another example of the method for notifying ID of base station being selected by use of the uplink radio channel.
FIG. 9C is a diagram showing yet another example of the method for notifying ID of base station being selected by use of the uplink radio channel.
FIG. 10 is a flowchart for explaining an outline of communication control among radio communication terminal and base stations.
FIG. 11 is a flowchart for explaining hand-over control of a radio communication terminal in a had-over state.
FIG. 12 is a flowchart for explaining another hand-over control of a radio communication terminal in a had-over state.
FIG. 13 is a sequence chart for explaining an outline of communication control among radio communication terminal and the base stations.
FIG. 14 is a flowchart for explaining a first base station selection processing operation of the radio communication terminal.
FIG. 15 is a flowchart for explaining a second base station selection processing operation of the radio communication terminal.
FIG. 16 is a flowchart for explaining a third base station selection processing operation of the radio communication terminal.
FIG. 17 is a flowchart for explaining a fourth base station selection processing operation of the radio communication terminal.
FIG. 18 is a diagram for explaining a hand-over state in the case that a base station has a plurality of communication areas.
FIG. 19 is a diagram showing a configuration example of a base station in a second embodiment.
FIG. 20 is a diagram showing an example of signal format of downlink radio channel in the second and the third embodiments.
FIG. 21 is a diagram showing a configuration example of a radio communication terminal in the second embodiment.
FIG. 22 is a diagram showing a configuration example of a base station in the third embodiment.
FIG. 23 is a diagram showing a configuration example of a radio communication terminal in the third embodiment.
FIG. 24 is a diagram showing yet another example of the signal format of the downlink radio channel.

### Best Mode for Carrying Out the Invention

A first to a third embodiment of the present invention will be described hereinafter with reference to the drawings.

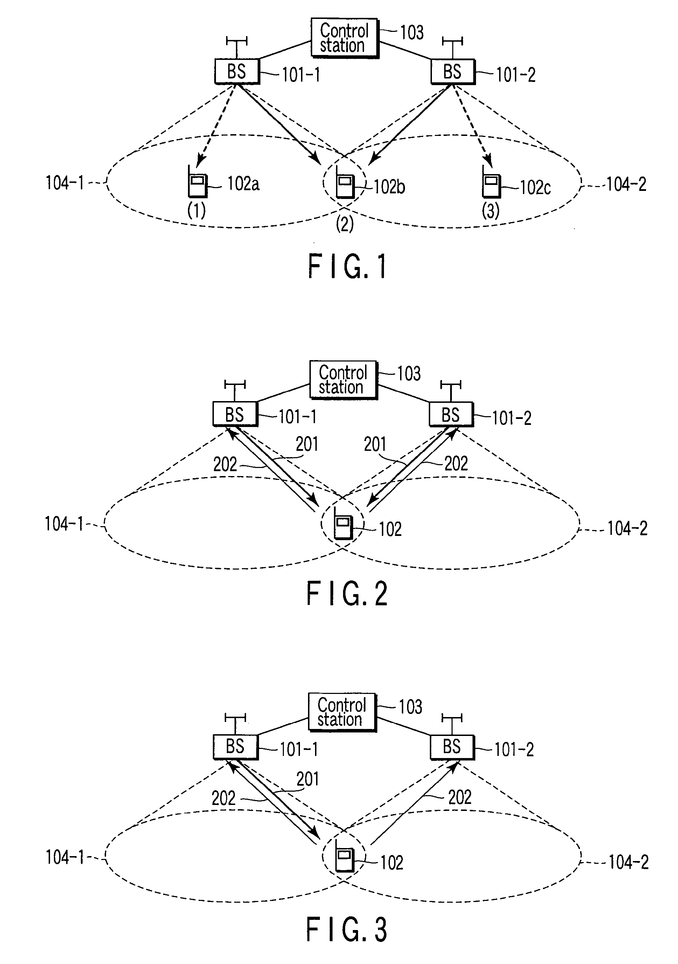

At first, a hand-over state regarding the first to the third embodiment will be described with reference to FIG. 1.

In FIG. 1, a plurality (here, for example, two) of base stations (BSs) 101-1 and 101-2 include communication areas 104-1 and 104-2, respectively. The base stations 101-1 and 101-2 are connected to a control station 103. A radio communication terminal 102a at a position (1) is located in the communication area 104-1 of the base station 101-1, so that it communicates with the base station 101-1. A radio communication terminal 102b at a position (2) is located in the communication area 104-1 of the base station 101-1 and also the communication area 104-2 of the base station 101-2, so that it can communicate with a plurality of base stations 101-1 and 101-2 and communicates with the plurality of the base stations 101-1 and 101-2 simultaneously. A radio communication terminal 102c at a position (3) is located in the communication area 104-2 of the base station 101-2, so that it communicates with the base station 101-2.

In the first to third embodiments, a state such that the radio communication terminal, like the communication terminal 102b at the position (2), can communicate with a plurality of base stations is referred to as a hand-over state. The hand-over state can be easily realized though control of the control station 103 in a manner that the radio communication terminal 102b observes reception conditions of radio signals transmitted from a plurality of base stations and notify the reception conditions to the control station 103 via any base station.

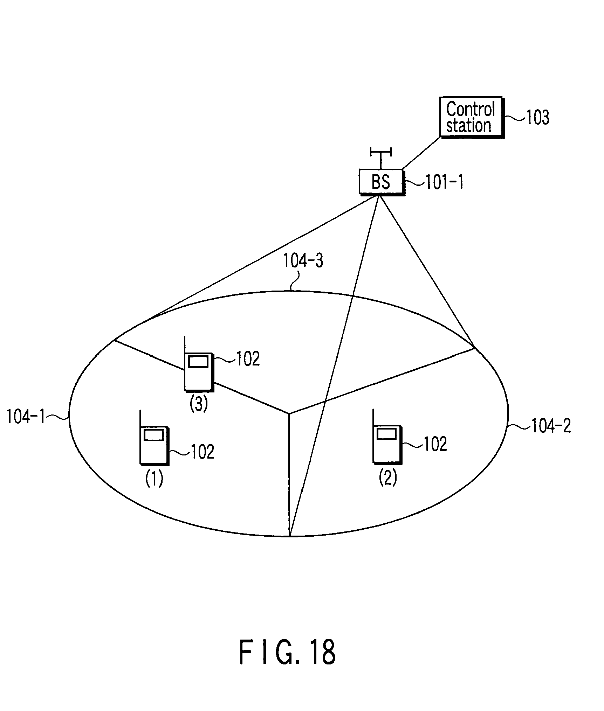

It is possible for the first to third embodiments to be also applied to the case that a base station has a plurality of communication areas as shown in FIG. 18. In FIG. 18, the base station 101-1 has a plurality (wherein, for example, three) of communication areas 104-1, 104-2 and 104-3. Accordingly, the radio communication terminal 102c at the position (3) is located in the communication areas 104-1 and 104-3, so that it is brought into a hand-over state between the communication areas 104-1 and 104-3. Such handover state is allowed to be easily realized by controlling the base station 101-1.

Furthermore, two control methods in the hand-over state will be described with reference to FIG. 2 and FIG. 3. One of the two control methods is a method such that pluralities of base stations transmit the same transmission data and a radio communication terminal receives the transmission data simultaneously, and another of the two control methods is a method such that a radio communication terminal receives the transmission data selectively. Hereinafter a method for receiving the same transmission data simultaneously is referred to as soft hand-over (SHO) and a method for receiving the same transmission data selectively is referred to as hard hand-over (HHO).

In FIG. 2, a radio communication terminal 102 in the hand-over state notifies a simultaneous transmission of the data, namely a request for the SHO to the plurality of base stations 101-1 and 101-2 though an uplink radio channel 202 from the radio communication terminal 102 to a base station. The plurality of base stations 101-1 and 101-2 which have received the foregoing notification performs a simultaneous transmission of data to the radio communication terminal 102 through a downlink radio channel 201 from the base station to the radio communication terminal. Thereby, the SHO is enabled to be realized.

In FIG. 3, the radio communication terminal 102 in the hand-over state notifies a selection result of a base station to which requests the data transmission, namely a request for the HHO to the plurality of base stations 101-1 and 101-2 though the uplink channel 202. The pluralities of base stations 101-1 and 101-2 which have received the notifications transmit the data to the radio communication terminal 102 though the downlink radio channel 201 when the transmission of the data is requested. Thereby, the HHO may be achieved. FIG. 3 shows the case that the base station 101-1 is selected.

### (First Embodiment)

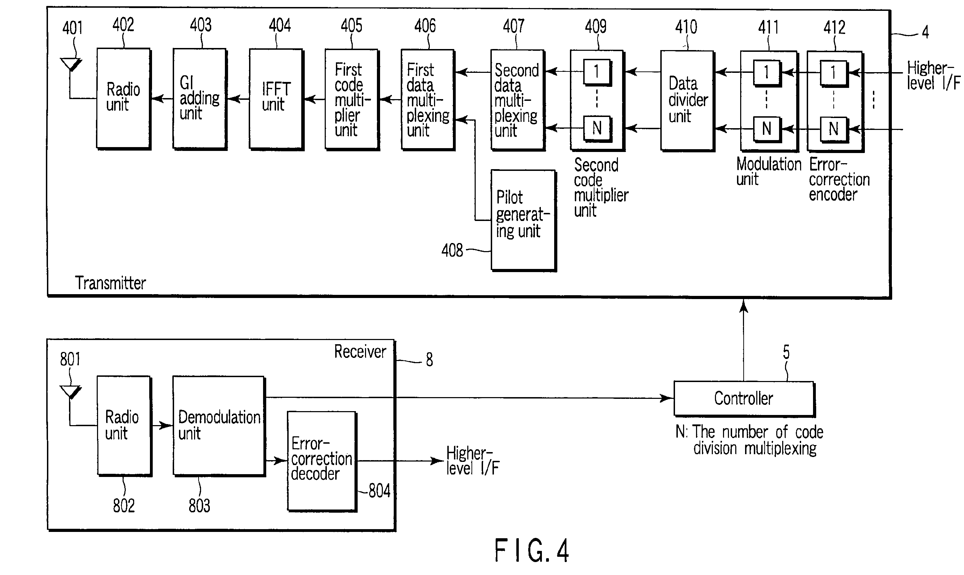

FIG. 4 shows a configuration example of a principal part of base stations (base stations 101-1 and 101-2) in the first embodiment.

In FIG. 4, the base station includes a transmitter 4, a controller 5 and a receiver 8. The transmitter 4 includes an antenna 401, a radio unit 402, a GI adding unit 403, an IFFT unit 404, a first code multiplier unit 405, a first data multiplexing unit 406, a second data multiplexing unit 407, a pilot generating unit 408, a second code multiplier unit 409, a data divider unit 410, a modulation unit 411 and an error-correction encoder 412. The receiver 8 includes an antenna 801, a radio unit 802, a demodulation unit 803 and an error-correction decoder 804.

Operations of each block of the transmitter 4 of the base station in FIG. 4 will be explained. A letter N expresses the number of maximum code division multiplexing. Maximum N transmission data items transferred from a higher-level interface (I/F) (higher-level layer) are input to the error-correction encoder 412 corresponding to each series, respectively. Each of N pieces of error-correction encoder 412 corresponding to each of the series performs error-correction encoding in a given encoding method and an encoding rate and outputs the error-correction encoded transmission data item to the corresponding modulation unit 411, respectively. Each of the N pieces of the modulation unit 411 corresponding to the each of series modulates the input transmission data item by a given modulation method to output the transmission data item to the data divider unit 410. The data divider unit 410 divides the input transmission data items of respective series in response to the number n (1≦n≦N) of code division multiplexing to outputs each transmission data item to the second code multiplier unit 409. The number n of the code division multiplexing of the transmission data items is notified by, for example, the controller 5.

The N pieces of the second data multiplexing unit 409, each corresponding to the series, are assigned codes which are for use in multiplexing data items each addressed to radio communication terminals in a CDMA method, respectively, the code being orthogonal with one another and differing in a prescribed spreading factor. Each piece of the second code multiplier unit 409 spreads the input transmission data item by the spreading factor by multiplying the input transmission data item by the assigned code, and then outputs the spread data item to the second data multiplexing unit 407. The second data multiplexing unit 407 multiplexes the inputted code-spread transmission data item, to output transmission data item being multiplexed to the first data multiplexing unit 406.

The pilot generating unit 408 generates a pilot signal having a given signal pattern to output it to the first data multiplexing unit 406. The first data multiplexing unit 406 multiplexes the transmission data item output from the second data multiplexing unit 407 and the pilot signal output from the pilot generating unit 408, to output data item being multiplexed to the first code multiplier unit 405. Hereinafter, the transmission data item and the pilot signal are generally referred to as data item.

The first code multiplier unit 405 is assigned, in advance, a code corresponding to the relevant base station (scramble code represented by pseudo random sequence). The first code multiplier unit 405 multiplies the scramble code assigned to the input data item, to output to the inverse fast Fourier transform (IFFT) unit 404. Different base stations use different scramble code sequence. The IFFT unit 404 performs IFFT for the input data item to output to the GI adding unit 403.

The GI adding unit 403 duplicates a part of the input data item to add it to a front of the data item (add the GI) and outputs the GI-added data item to the radio unit 402. The radio unit 402 performs on the GI-added data item, given radio processing such as D/A conversion, quadrature modulation, up-conversion, band limitation and power amplification to generate a radio signal (OFDM signal) then the antenna 401 transmits the generated radio signal.

The controller 5 controls each block of the transmitter 4 and also determines whether transmit or not transmit the transmission data item to the corresponding radio communication terminal in accordance with a data transmission request included in the data received from the receiver 8 and notified from the radio communication terminal in the hand-over state. The controller 5 inputs, to the error-correction encoder 412, a control information item including a destination address of the transmission data item, an encoding method, encoding rate and modulation method, etc., as a control data item.

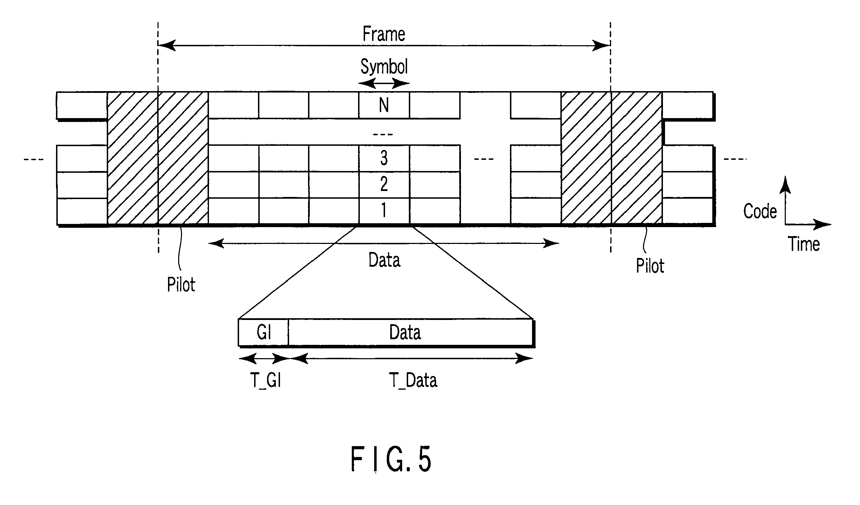

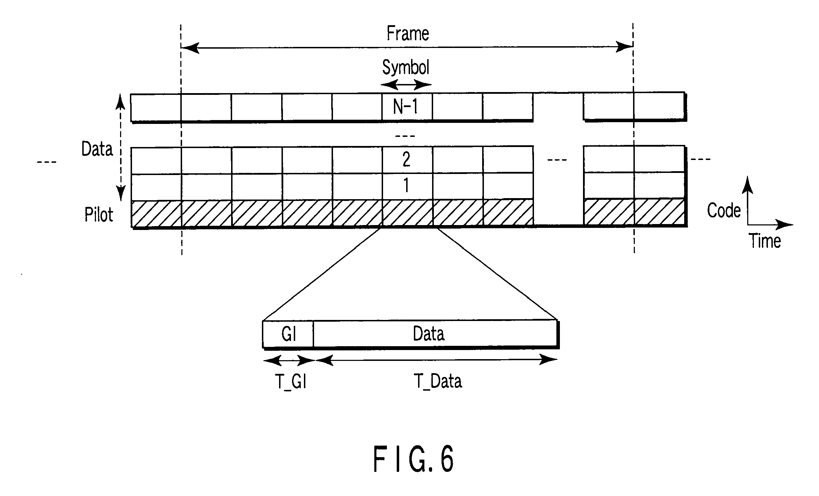

In the first data multiplexing unit 406, a multiplexing method for multiplexing the transmission data item input from the second data multiplexing unit 47 and the pilot signal input from the pilot generating unit 408 may be adopted arbitrarily. For example, a method for multiplexing by time division shown in FIG. 5 is usable. And a method for multiplexing by code division shown in FIG. 6 is also applicable.

In the receiver 8, the antenna 801 inputs the received radio signal to the radio unit 802. The radio unit 802 performs, on the radio signal being input, the given radio processing such as band limitation, down conversion, quadrature demodulation, A/D conversion, to output to the demodulation unit 803. The demodulation unit 803 demodulates the signal being input, to output to the controller 7 if the obtained receiving data item has not been applied error-correction encoding (for example, data item such as information to be transmitted to each base station from the radio communication terminal and to notify the base station selected by the radio communication terminal during hand-over control, as mentioned below) and to output to the error-correction decoder 804 if the obtained receiving data item has been applied the error-correction encoding. The result obtained by error-correction decoding at the error-correction decoder 804 is output to the controller 5.

FIG. 5 and FIG. 6 show the signal formats of the downlink radio channels. A transmission unit for the transmission data is referred to as a symbol and a frame is constituted by multiplexing a plurality of transmission data symbols and a plurality of pilot symbols. In general, the amount of the transmission data included in the frame is larger than the number of the pilots. One symbol period includes the transmission data or the pilot, and the GI (guard interval) which is the duplication of a part of the transmission data or pilot and added thereto. If a unit time of the GI is set to T_GI and a unit time of the transmission data or the pilot is set to T_Data, the T_GI is almost 1/4 to 1/10 of the T_Data in general.

In the format shown in FIG. 5, the pilot is multiplexed on a head section and an end section of one frame and the transmission data is multiplexed between the head and end sections. The transmission data is applied code division multiplexing by the code division multiplexing number of N at a maximum (N is positive integer). In this case, the transmission data and the pilot are arranged only at a given symbol in the frame.

In the format shown in FIG. 6, the pilot and the transmission data are applied code division multiplexing in one Frame by the code division multiplexing number of N-1 at a maximum. In this case, the transmission data and the pilot are arranged at all symbols in the frame. In other words, the pilot and the transmission data are multiplexed by the code division multiplexing number of N at a maximum in one frame.

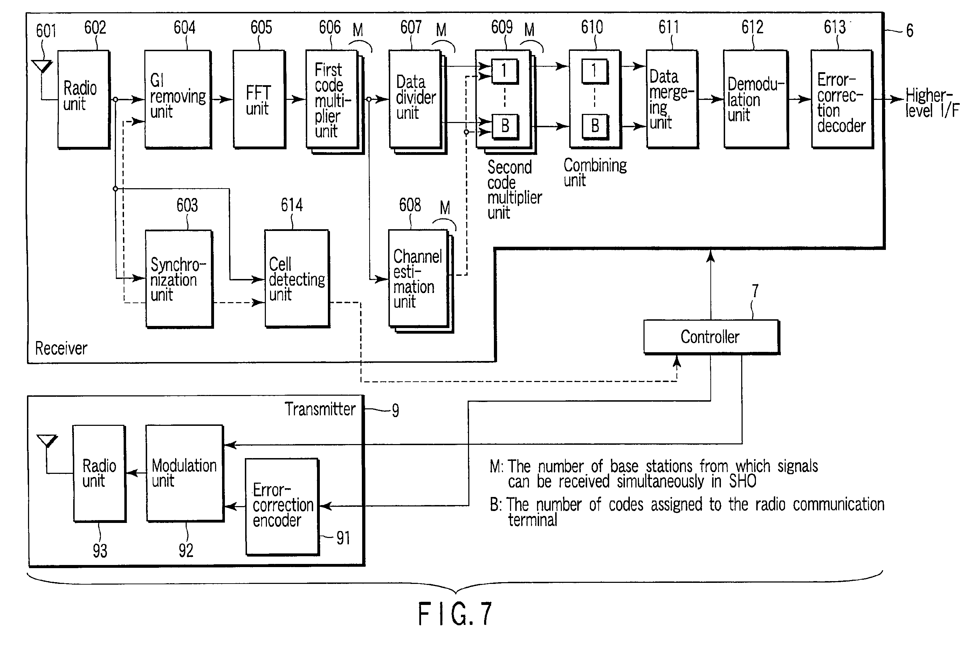

FIG. 7 shows the configuration example of the radio communication terminal in the first embodiment.

In FIG. 7, the radio communication terminal includes a receiver 6, a controller 7 and a transmitter 9. The receiver 6 includes an antenna 601, a radio unit 602, a synchronization unit 603, a GI removing unit 604, FFT(Fast Fourier Transform) unit 605, a first code multiplier unit 606, a data divider unit 607, a channel estimation unit 608, a second code multiplier unit 609, a combining unit 610, a data merging unit 611, a demodulation unit 612, an error-correction decoder 613 and a cell detection unit 614.

Each of the first code multiplier unit 606, the data divider unit 607 and the channel estimation unit 608 includes M subunits corresponding to M base stations at a maximum capable of simultaneously receiving in the SHO, respectively, so as to perform the SHO in the hand-over state. For example, each of M subunits of the first code multiplier unit 606 corresponds to the each base station and corresponds to one first code multiplier.

In addition, the radio communication terminal is assigned at least one code in advance in order to extract the data addressed to the corresponding radio communication terminal from the signal multiplexed in the CDMA method. Here, it is assumed that B codes (B is integer of 1≦B≦N) at a maximum are assigned to the radio communication terminal. Therefore, the combining unit 610 in FIG. 7 includes B subunits each corresponding to each code. For example, the each of B subunits of the combining unit 610 corresponds to each code and corresponds to one combining unit.

The second code multiplier unit 609 includes M subunits. Each of the M subunits has B pieces of second code multipliers corresponding to B codes respectively, in order to receive B signals which are spread by respective B codes assigned to the corresponding radio communication terminal and which are transmitted from each of M base stations at a maximum that the radio communication terminal is capable of simultaneously receiving in the SHO. Accordingly, the second code multiplier unit 609 includes (M×B) second code multipliers in all.

Next to this, the operations of each block of the receiver 6 of the radio communication terminal in FIG. 7 will be described. In this case, it is assumed that the signal format of the radio channel shown in FIG. 5 is adopted. The antenna 601 inputs each radio signal received from each base station to the radio unit 602. The radio unit 602 performs, on the each signal being input, given radio processing such as band limitation, down conversion, quadrature demodulation and A/D conversion, to output to the synchronization unit 603, the GI removing unit 604 and the cell detection unit 614.

The synchronization unit 603 detects the timings of the symbol and frame shown in FIG. 5 and FIG. 6, to notify them to the GI removing unit 604 and the cell detection unit 614. Here, the detection of the timing of the symbol means to detect a synchronous timing indicating boundary position between two transmission symbols and the detection of the timing of the frame means to detect a synchronous timing indicating boundary position between two frames each including the plurality of transmission symbols. The detection of the symbol timing and frame timing is performs because multi-carrier demodulation cannot be achieved without inputting, to the FFT unit, an OFDM signal appropriately positioned.

The GI removing unit 604 removes, from each signal being input, the GI which is added by the base station based on the timing notified from the synchronization unit 603 and outputs to the FFT unit 605. The FFT unit 605 performs the FFT on each signal being input, to output to M first code multiplier subunits of the first code multiplier unit 606.

M first code multiplier subunits are assigned, respectively, the scramble codes corresponding to respective (up to M) base stations to be received by the corresponding radio communication terminal in advance. Each of the M first code multiplier subunits multiplies the signal being input by the scramble code which is the same code sequence as that by which the corresponding base station multiplied at the first code multiplier unit 405. As a result, if the signal is the transmission data, it is outputted to the corresponding data divider subunit of M data divider unit 607, if the signal is pilot, it is outputted to the corresponding channel estimation subunit of M channel estimation unit 608.

In the case where the base station spread the transmission data to be transmitted to the corresponding radio communication terminal by using the B codes assigned to the radio communication terminal and multiplex them at the second data multiplexing unit 407, each of the M data divider subunits divides and outputs the transmission data being input to one of the M subunits of the second code multiplier unit 609, the one of the M subunits corresponding to the base station, in accordance with the multiplexing level B.

Each of the M channel estimation subunits of the channel estimation unit 608 performs channel estimation between each base station by using each pilot being input from the each base station, to notify the estimated results to the corresponding one of M subunits of second code multiplier unit 609.

Each of the M subunits of the second code multiplier unit 609 has B second code multipliers each corresponding to each code assigned to the radio communication terminal. And each of the B second code multipliers despreads by multiplying the transmission data being input by the code which is the same code series as that by which multiplied at the corresponding second code multiplier of the second code multiplier unit 409 of the base station, on the basis of the channel estimation result notified from the corresponding channel estimation subunit of the channel estimation unit 608, and outputs to the corresponding one of B combining unit of the combining unit 610.

As described above, in the case that the radio communication terminal performs the SHO, each of the first code multiplier unit 606, data divider unit 607, channel estimation unit 608 and second code multiplier unit 609 includes M subunits each corresponding to each of the base stations so as to simultaneously receive the signals from up to M base stations. And each subunit processes the data being transmitted from the respective base stations and being distinguished by the respective scramble codes, as described above.

Each of B combining subunits of the combining unit 610 combines a plurality of transmission data items being input, in other words, the M series of transmission data items which correspond to the code assigned to the combining subunit and are transmitted form a plurality of (up to M) base stations, to output to the data merging unit 611. If the radio communication terminal is not in the hand-over state or performs the HHO in the hand-over state, the above-mentioned combination is not performed.

The data merging unit 611 combined the transmission data item being input, to output to the demodulation unit 612. If the transmission data item to the radio communication terminal is not applied the code-multiplexing, the above-described merging is not performed.

The demodulation unit 612 demodulates the transmission data item being input by use of the demodulation method corresponding to a given modulation method, to output to the error-correction decoder 613. The error-correction decoder 613 decodes the transmission data being input based on a given encoding method and encoding rate, to output to a higher level I/F.

The cell detection unit 614 detects, by using the input signals, other base station whose reception state is sufficient to receive the signal transmitted from the other base station and which is not detected by the synchronization unit 603, to notify the timing of the symbols and frames (hereinafter referred to as receiving timing) of all detected base stations including the base station detected by the synchronization unit 603 to the controller 7. The received power or the signal-to-interference and noise power ratio of the pilot can be used as the reception condition to be notified.

The controller 7 controls each block of the receiver 6, determines whether or not the corresponding radio communication terminal is in the hand-over state, based on the receiving timing and reception conditions of all base stations notified from the cell detection unit 614, and notifies the determination result to a desired base station from the transmitter 9. The controller 7 determines whether performs the SHO or the HHO in the case of the hand-over state, to notify the determination as a data transmission request to a plurality of base stations which are targets of the hand-over state from the transmitter 9.

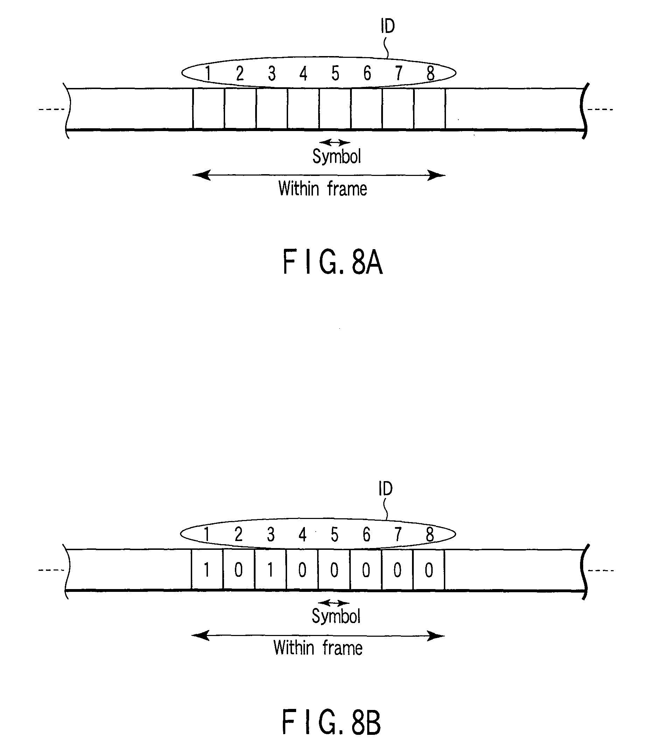

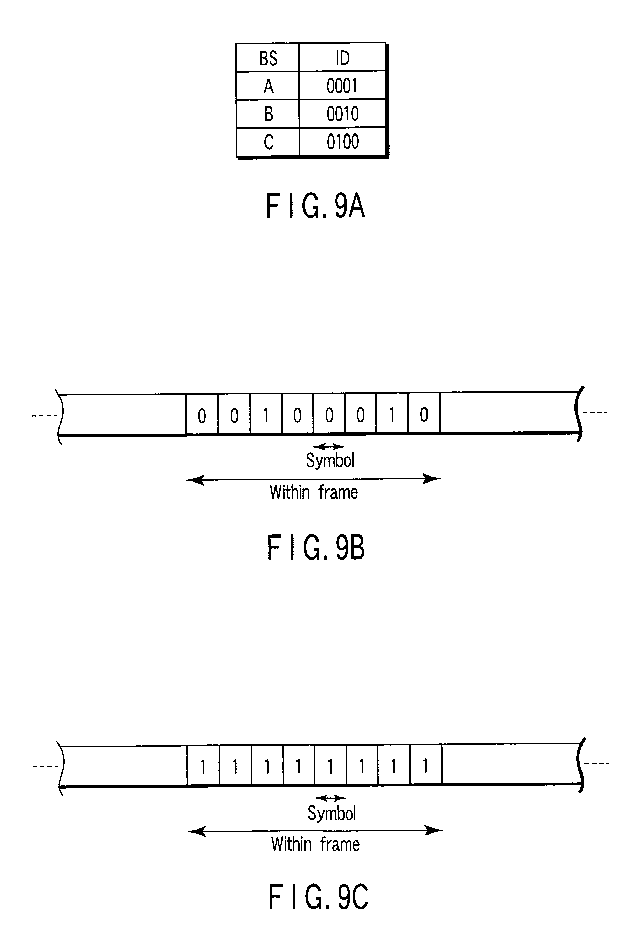

The notification of determination of the SHO or HHO is achieved through the uplink radio channel formats as shown in FIGS. 8A and 8B and FIGS. 9B and 9C. FIGS. 8A and 8B and FIGS. 9B and 9C show part of the uplink radio channel formats, respectively. Here, a unit of the transmission data item in the uplink radio channel is referred to as symbol and they show the case where 8 symbols are applied to the above-mentioned notification. As shown in FIGS. 8A and 8B and FIGS. 9B and 9C, it becomes possible to notify either SHO or HHO with a unit at least one Frame by making the 8 Symbols smaller than the one Frame of the downlink radio channel. In addition, the number of the symbols applied to the above-mentioned notification and the unit of the above-mentioned notification are set arbitrary.

In the example shown in FIG. 8A, IDs of each base station are assigned to 8 Symbols, respectively. Each ID (identification data item) assigned to each of a plurality of base stations is notified to the radio communication terminal in the handover state. The assignment of the IDs to the base stations or the notification of the IDs to the radio communication terminal can be easily realized by the control from the control station 103 shown in FIG. 1. In this case, the radio communication terminal selects the base station requesting for the data transmission among all base stations in the hand-over states by means of the controller 7 which has received the notification from the cell detection unit 614. And as shown in FIG. 8B, the radio communication terminal sets '1' to the symbol to which the selected base station is assigned and '0' to the symbol other than the foregoing symbol, to notify the notification to all base stations in the hand-over states. This operation corresponds to the fact that the radio communication terminal requests the SHO if there are a plurality of symbols to which '1' is set and it requests the HHO if there is one symbol to which '1' is set.

In FIG. 8B, the base stations having the IDs '1' or '3' are requested to transmit the data item and SHO is performed with the base stations. In the example shown in FIGS. 8A and 8B, it is possible to form the hand-over state up to 8 base stations.

In the example shown in FIGS. 9B and 9C, similar to FIGS. 8A and 8B, the IDs assigned to respective base stations are notified to the radio communication terminal in the hand-over state. The FIG. 9A shows a table indicating the IDs which correspond respective base stations and have been notified to the radio communication terminal. This table is stored in, for example, the controller 7. In the case, the radio communication terminal determines whether performs the SHO to request the data transmission to all base stations in the hand-over states or performs the HHO to request the data transmission to one base station, by means of the controller 7 which received the notification from the cell detection unit 614.

In the case of the HHO, the radio communication terminal selects the base station to request the data transmission (for example, in FIG. 9B, a base station B of ID '0010' is selected), set the ID corresponding to the selected base station to the symbols directly, and notifies the ID to all base stations in the hand-over states. In FIG. 9B, reliability is enhanced by repeatedly setting the ID of the base station.

In the case of the SHO, as shown in FIG. 9C, '1' are set to all symbols and the fact is notified to all base stations in the hand-over state.

In the example shown in FIG. 9B, the data transmission is required to the base station B with the ID of '0010', and the example shown in FIG. 9C, the data transmission is required to all base stations in the over-hand state.

Although the base station in the hand-over state with the radio communication terminal transmits the data to the radio communication terminal when the data transmission request has been notified from the radio communication terminal, it is possible for this base station to transmit the data to the radio communication terminals other than the foregoing radio communication terminal and not to transmit the data to any radio communication terminal. The former manner of the control brings about an effect to enhance availability efficiency of the downlink radio channel. The latter manner of the control brings about an effect to reduce interference to the radio communication terminal.

Although the notification that the radio communication terminal in the hand-over state performs the SHO or HHO by, for example, one frame of the downlink radio channel as a unit, the selected base station may be notified only in the case that the radio communication terminal has determined to perform the HHO by taking into consideration the fact that availability efficiency of the uplink radio channel and control load of the base station and the radio communication terminal.

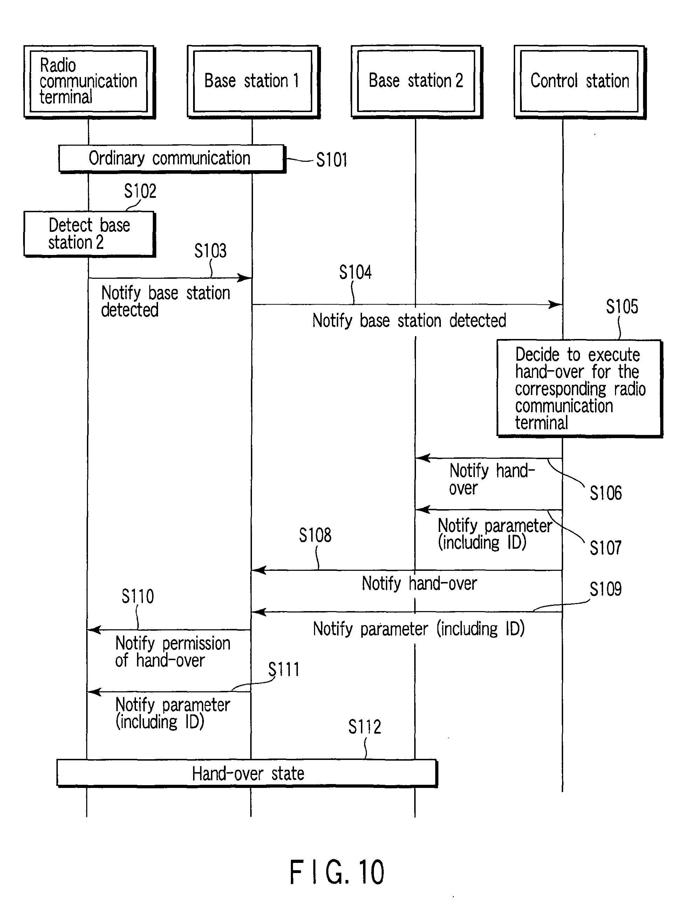

FIG. 10 is a sequence chart for explaining an outline of communication control between the radio communication terminal 102 and the base station 101 (here, a base station 1 corresponding to the base station 101-1 and a base station 2 corresponding to the base station 101-2). The radio communication terminal 102 is assumed to communicate with the base station 1 (step S101). At this time, the controller 7 of the radio communication terminal 102 determines, for example, periodically, whether it is in the hand-over state or not, that is to say, whether it is in the state capable of communicating with the plural base stations or not, by using receiving timings and reception conditions of all base stations being detected and notified by the cell detection unit 614. The controller 7 is assumed to detect the possibility (hand-over state) to communicate even with the base station 2 other than the base station 1 based on the receiving timings and reception conditions of all base stations being detected and notified by the cell detection unit 614 (step S102). In this case, the radio communication terminal 102 transmits the information to notify the fact that the communication between the base stations 1 and 2 is available to the base station 1 currently in communicating, through the error-correction encoder 91, modulation unit 92 and radio unit 93 (step S103).

When receiving the foregoing information via the radio unit 802 and demodulation unit 803, the controller 5 of the base station 1 transmits it to the control station 103 (step S104). When receiving the information, the control station 103 determines to perform the hand-over to the radio communication terminal 102 (step S105) and notifies base station 1 and base station 2 being notified to perform the hand-over regarding the radio communication terminal 102 and a variety of parameters necessary for the hand-over including the IDs of each base station (step S106-step S107, step S108-step S109).

When receiving the aforementioned notification from the control station 103, the base station 1 transmits hand-over permission-notification to the radio communication terminal 102 (step S110) and notifies the variety of parameters necessary for the hand-over including the ID of each base station (step S111). With the foregoing procedures, the radio communication terminal 102 and base stations 1 and 2 shift to the hand-over state (step S112).

The ID of each base station being notified in steps S107, S109 and S111 in FIG. 10 are those to be used in the notification of the selected base station which are selected by the radio communication terminal 102 in the hand-over state.

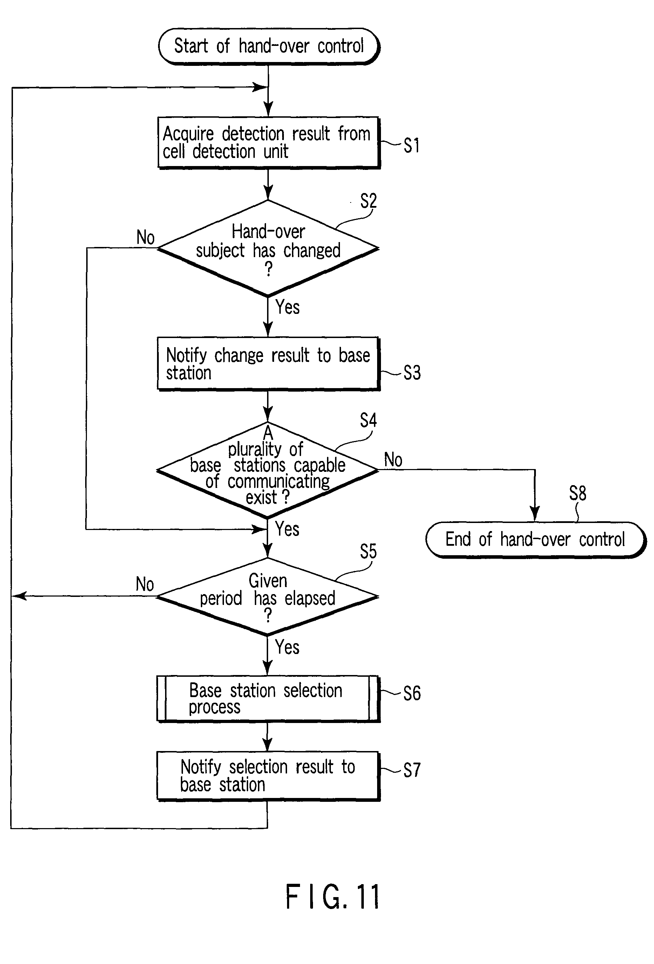

Next, hand-over control of the radio communication terminal 102 which has come into the hand-over state, that is, a processing operation of the controller 7 to select the SHO or HHO will be explained in detail as shown in FIG. 11.

When the hand-over control has started as shown in FIG. 10, the controller 7 periodically acquires cell detection results from the cell detection unit 614 (step S1), determines whether the hand-over state has changed or not by using its reception state (received power or the signal-to-interference and noise power ratio)(step S2), and notified the base station if the hand-over state has changed (step S3). The change means the increase and decrease in the number of base stations capable of communicating. In the case that there is the change, the controller 7 determines whether the hand-over state is maintained or not afterward (step S4). The maintenance of the hand-over state means that the radio communication terminal 102 can communicate with at least two base stations.

When the controller 7 determines not to maintain the hand-over state, that is, if the number of base stations whose value of the reception state is not less than the given threshold is up to one (step S4), the controller 7 notifies each base station currently in communication to terminate the hand-over control (step S8). When the controller 7 determines to maintain the hand-over state (step S4), the controller 7 proceeds to step S5, determines whether a period, which is determined arbitrarily regarding base station selection process, has elapsed or not. A period of time corresponding to the aforementioned one frame of the down link radio channel or the like are set to the period. When the period elapses, the controller 7 performs the base station selection process (step S6). This is a process to determine whether the SHO is performed or the HHO is performed, and to determine the base station to require the data transmission, by using the receiving timings and reception states which correspond to the base stations in the hand-over states and which are acquired from the cell detection unit 614. The selection result from the base station selection process is notified to each base station through the uplink radio channel having the format as shown in FIGS. 8A and 8B or FIGS. 9B and 9C (step S7).

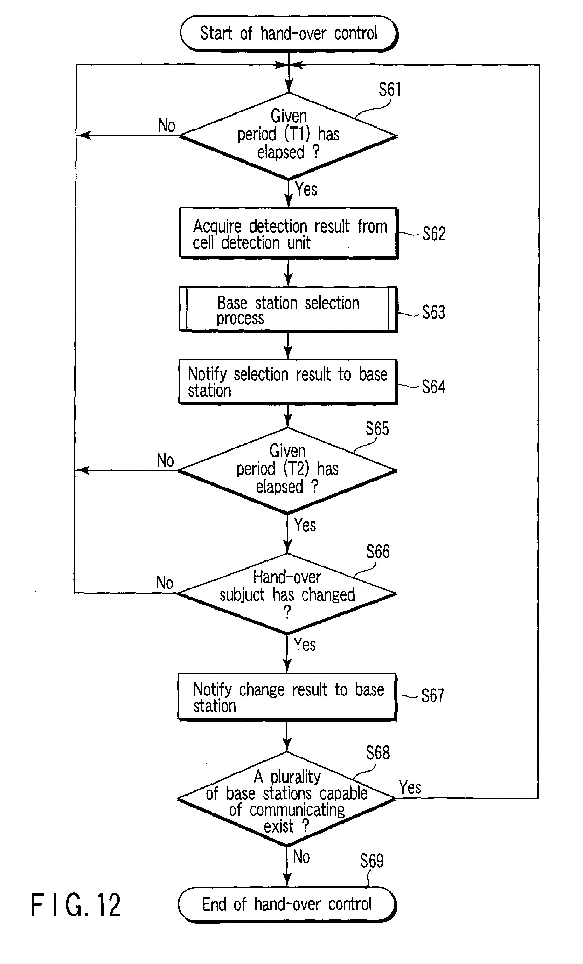

Further, the aforementioned selection process of the controller 7 illustrated in FIG. 11, which determined whether should perform SHO or HHO, may also be performed as shown in FIG. 12.

After starting the hand-over control as shown in FIG. 10, the controller 7 determines whether the given period of time (T1) has elapsed or not (step S61). If the given period of time (T1) has elapsed, the controller 7 acquires the cell detection results from the cell detection unit 614 (step S62) and uses this to perform the base station selection process (step S63). This process is one to determine if the SHO is performed or the HHO is performed or to determine the base station to require the data transmission, by using the receiving timings and reception states, which correspond to the base stations in the hand-over states and are acquired from the cell detection unit 614. The selection result from the base selection process is notified to each base station through the uplink radio channel having the format as shown in FIG. 8A and 8B or FIG. 9B and 9C (step S64). Further, for the period of time (T1), a period of time corresponding to the aforementioned one frame of the down link radio channel or the like are set.

Subsequently, it is determined whether the given period of time (T2) has elapsed or not (step 65). If the period of time (T2) has elapsed, the reception state of the cell detection result (received power or the signal-to-interference and noise power ratio) is used to determine whether the hand-over state has changed or not (step S66). And if the hand-over state has changed, the fact is notified to the base station (step S67). The change means the increase and decrease in the number of base stations possible to make communication. In the case of the change, the controller 7 determines whether the hand-over state can be maintained or not hereafter (step S68). The maintenance of the hand-over state means that the radio communication terminal can communicate with at least two base stations. If the controller 7 determines it impossible to maintain the hand-over state, namely, if there is not more than one base station whose reception state being greater or equal to the preset threshold value, the controller 7 notifies each base station currently in communication to terminate the hand-over control (step S69). Further, preferably, the period of time (T2) is set at a larger value than that of the period of time (T1) .

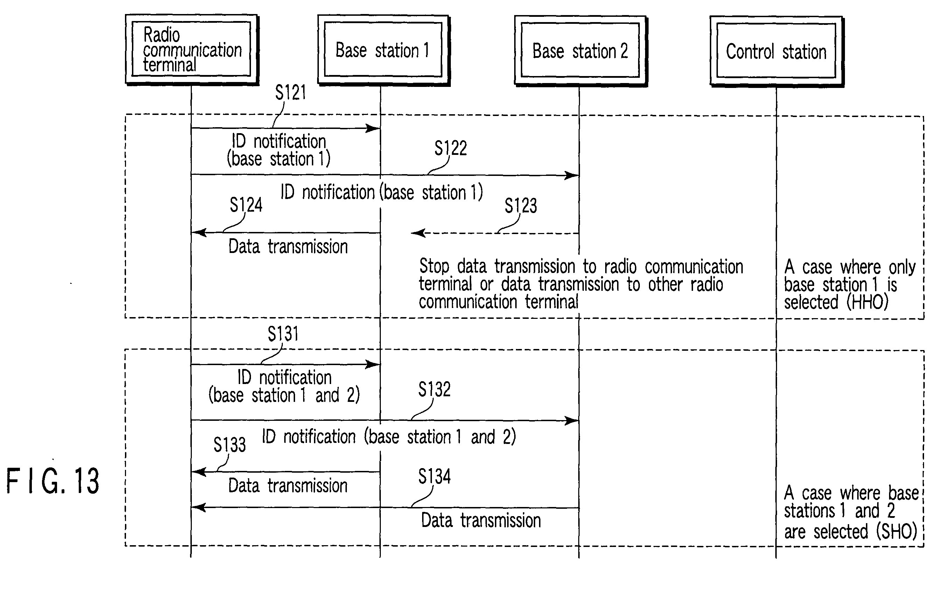

FIG. 13 is the sequence chart for explaining processing operations in the case notifying the ID of the base station selected in the base station selection process in the step S6. Here, it is assumed that the selectable base stations in the hand-over states are base stations 1 and 2. When the radio communication terminal selects only the base station 1, namely in the case of the HHO, the radio communication terminal transmits the information notifying the base station selection result including only the ID of the base station 1 to the base stations 1 and 2 (step S121 and step S122). The base station 2 comes to know the fact that the selected base station is only the base station 1 by receiving the notification and after this, stops the data transmission to the corresponding radio communication terminal (step S123). In this case, the base station 12 may assign a radio source, which has been used in the communication with the radio communication terminal, to another radio communication terminal. On the other hand, the base station 1 continues transmitting the data to the radio communication terminal by receiving the foregoing notification from the radio communication terminal (step S124).

When the radio communication terminal selects the base station 1 and base station 2, namely in the case of the SHO, the radio communication terminal transmits the information notifying the base station selection result including the IDs of the base station 1 and base station 2 to the base stations 1 and 2 (step S131 and step S132). By receiving the notification, the base stations 1 and 2 continue the data transmission to the radio communication terminal (step S133 and step S134).

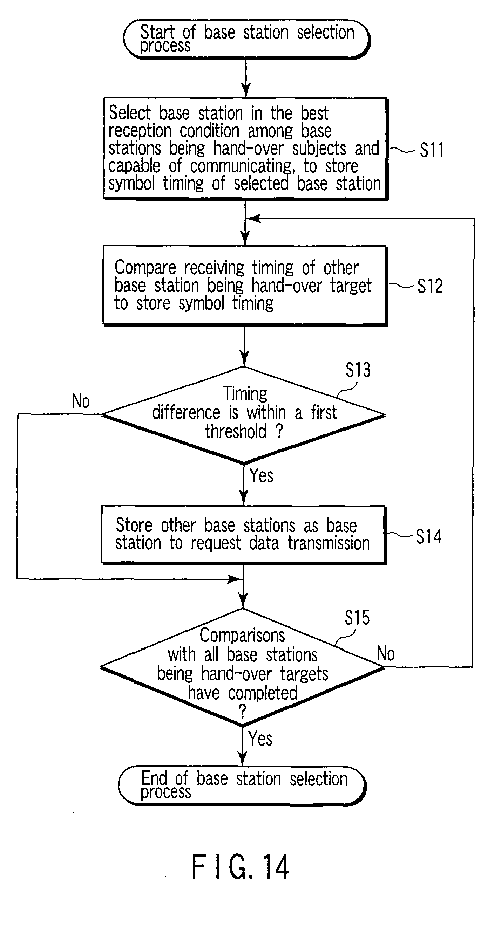

Next to this, (first) base station selection processing operations of the radio communication terminal will be explained by referring to the flowchart shown in FIG. 14.

Here, the case that the format shown in FIG. 8A and 8B is used as the format of the uplink radio channel will be described. The controller 7 selects a base station in the best reception condition among a plurality of (communicable) base stations which are targets of the hand-over by using the receiving timings and reception conditions which correspond to the (communicable) base stations in the hand-over state and are acquired from the cell detection unit 614, to store the receiving timing (here, symbol timing) detected from the signal corresponding to the base station being selected (step S11). Next, the controller 7 compares the receiving timing (here, symbol timing) of the other base station which is one of the targets of the hand-over to the symbol timing being stored (step S12), and if the difference (deviation) between the two timings is within a given first threshold value (step S13), stores the other base station as a base station to be required the data transmission (step S14).

The comparison process in the step S13 is performed for all base stations which are targets of the hand-over (step S15). The first threshold value in the step S13 is a value set based on, for example, the GI period T_GI, and a value such as T_GI, 3/4T_GI and 2/3T_GI, which is defined as T_GI-OFFSET by providing a given offset (OFFSET<T_GI).

In the flowchart shown in FIG. 14, it is an object to select the base station whose reception condition is best, which is selected in step S11, and select another base station such that the difference between the signal of the base station being selected in step S11 and the symbol timing of the another of the base station is within the first threshold value. That is, according to FIG. 14, a base station whose reception condition is the best and another base station whose symbol timing differs from that of the base station whose reception condition is the best in that the difference between the symbol timings is at least within the T_GI.

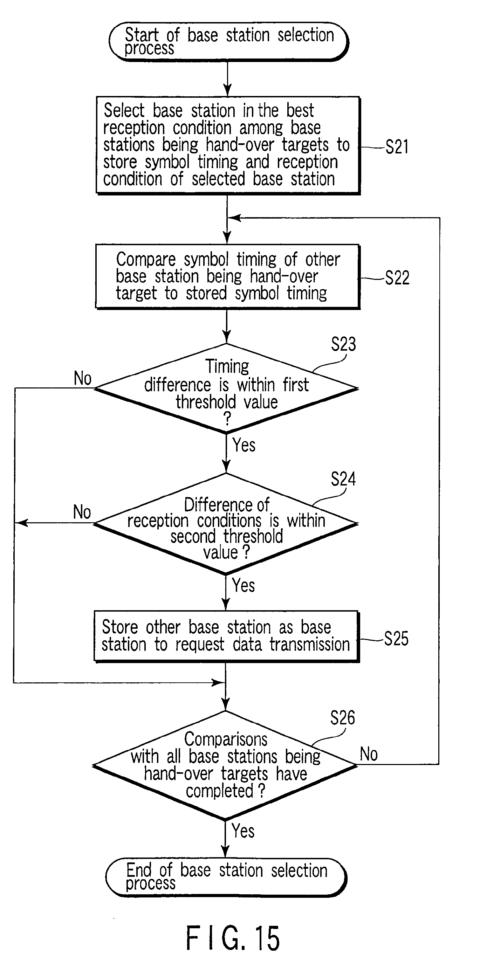

FIG. 15 is a flowchart for explaining another (a second) base station selection process in the Step S6 in FIG. 11.

The controller 7 selects a base station in the best reception condition among a plurality of (communicable) base stations which are targets of the hand-over by using the receiving timings and reception states which correspond to a plurality of (communicable) base stations in the hand-over state and are acquired from the cell detection unit 614, to store the reception condition of the base station being selected and the receiving timings (here, symbol timings) detected from the signal corresponding to the base station being selected (step S21). Next, the controller 7 compares the receiving timing (here, symbol timing) of another base station which is one of the targets of the hand-over to the symbol timing being stored (step S22), if the difference (deviation) of both timings is within the first threshold value (step S23), further proceeds to a step S24, and compares the reception conditions between another base station and the base station (which is in the best reception condition) being selected, if the difference of both reception states is within the second threshold value (step S24), stores the another base station as a base station to be required the data transmission (step S25). Above-mentioned comparison process is performed for all base stations which are the subjects of the hand-over (step S26). Further, the second threshold value related to the reception condition is a value of about 3 dB to 4 dB.

An object of the flowchart shown in FIG. 15 is to select a base station whose reception condition is best, which is selected in the step S21, and select another base station which is such that the difference of the symbol timings between the signal of the base station whose reception condition is the best and the symbol timing of the another of the base station is within the first threshold value and the difference of the reception conditions between the reception condition of the base station whose reception condition is the best and that of the another of the base station is within the second threshold value. That is, according to FIG. 15, the base station whose reception condition is best and another base station are selected, the another base station whose symbol timing differs from that of the base station whose reception condition is the best in that the difference between the symbol timings is at least within the T_GI, and whose reception condition differs from that of the base station whose reception condition is the best in that the difference between the reception conditions is within the second threshold value.

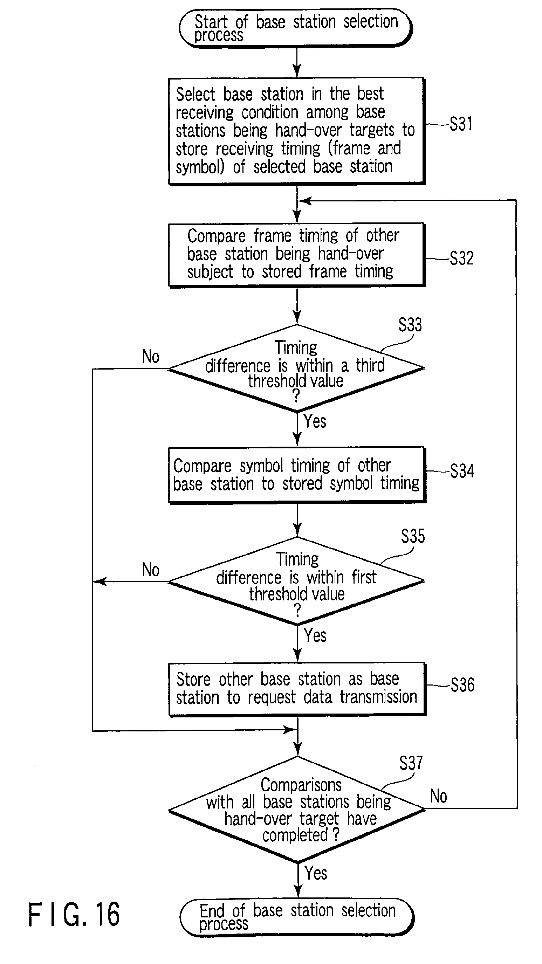

FIG. 16 is a flowchart for explaining yet another (third) base station selection processing operations in the step S6 in FIG. 11.

The controller 7 selects a base station whose reception condition is the best among a plurality of (communicable) base stations which are the targets of the hand-over by using the receiving timings and reception conditions which correspond to a plurality of base stations in the hand-over state and are acquired from the cell detection unit 614, to store the receiving timings (frame timing and symbol timing) of the base station (step S31).

Next to this, at first, the controller 7 compares the frame timing of another base station which is one of the targets of the hand-over to the stored frame timing of the base station whose reception condition is the best (step S32). And if the difference (deviation) of both frame timings is within a given third threshold value (step S33), the controller 7 further compares the symbol timing of the other base station to the stored symbol timing of the base station whose reception condition is the best (step S34). If this is within the foregoing first threshold value (step S35), the other base station is stored as a base station to be required the data transmission (step S36). The aforementioned comparison processing is performed for all base stations which are the subjects of the hand-over (step S37).

The third threshold value relating to the frame timing is defined as, for example, an integral multiple of time of one symbol period (T_GI+T_data).

In the flowchart in FIG. 16, it is objected to select a base station whose reception condition is the best, which is selected in the step S31, and select another base station which is such that the difference between the signal of the base station whose reception condition is the best and the symbol timing of the another of the base station is within the first threshold value when the difference between the signal of the base station whose reception condition is the best and the frame timing of the another of the base station is less than or equal to (or less than) the integral multiple of time of one symbol period. That is to say, according to FIG. 15, the base station whose reception condition is the best and another base station which is such that the difference of the symbol timing is within at least the T_GI when the difference between the signal of the base station whose reception condition is the best and the frame timing of the another of the base station is within the integral multiple of time of one symbol period, is selected.

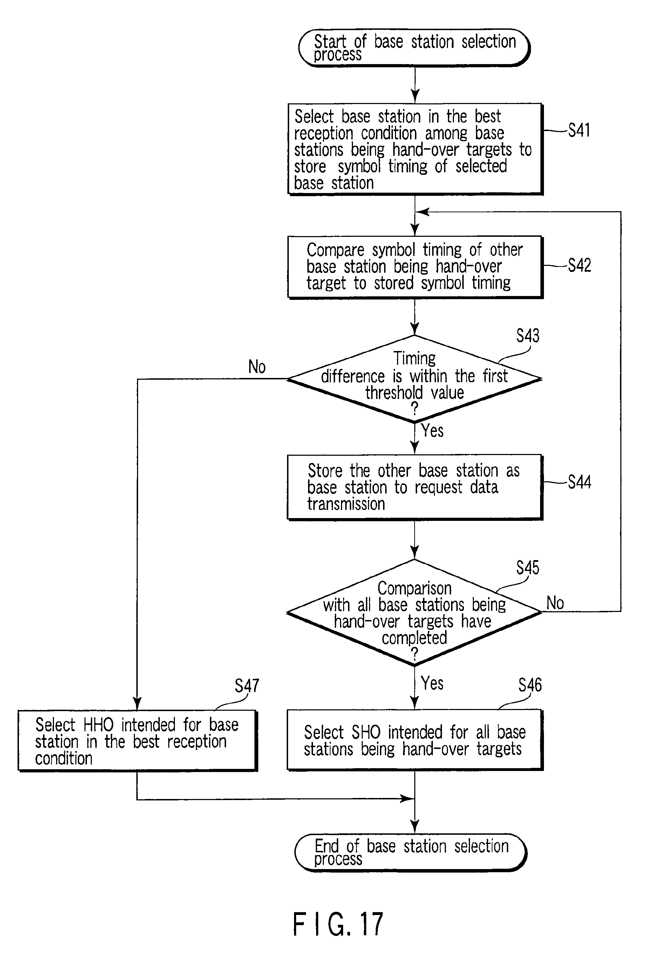

FIG. 17 is a flowchart for explaining yet another (fourth) base station selection processing operations in the step S6 in FIG. 11.

Here, the case that the format shown in FIG. 9 is used as the format of the uplink radio channel will be described. The controller 7 selects the base station whose reception condition is the best among a plurality of base stations which are targets of the hand-over by using the receiving timings and reception conditions which correspond to the base stations in the hand-over state and are acquired from the cell detection unit 614, to store the receiving timing (here, symbol timing) of the base station being selected (step S41). Next, the controller 7 compares the symbol timing of another base station which is one of the targets of the hand-over to the stored symbol timing of the base station whose reception condition is the best (step S42). And if the difference (deviation) between both symbol timings is not within the first threshold value (step S43), proceeding to the step S47, the HHO covering the base station whose reception condition is the best. That is, if there exists, among the base stations which are targets of the hand-over, at least one base station which is such that the difference between the symbol timing of the base station whose reception condition is the best and the symbol timing of the one base station exceeds the first threshold value, the HHO is selected.

The comparison processing in the step S42 and step S43 are performed to all base stations which are targets of the hand-over, if the differences between the symbol timings of signals from all of the base stations and the symbol timing of the signal from the base station whose reception condition is the beset are within the first threshold value (step S42-step S45), the SHO covering all of the base stations is selected (step S46).

In the flowchart shown in FIG. 17, if differences between symbol timings of the entire base stations in the hand-over state and that of the base station whose reception condition is the best are within at least the T_GI, the SHO targeted to the entire base stations is selected. And in the flowchart, if the difference between at least one of the symbol timings of the base stations and the symbol timing of the base station whose reception condition is the best exceeds the T_GI, the HHO targeted to the base station whose reception condition is the best is selected.

As mentioned above, according to the first embodiment, in the case where the code division multiple access and orthogonal frequency division multiplexing are used as the communication method, even when the base stations are asynchronous with one another, the hand-over can be realized with easy control.

That is to say, the radio communication terminal 102 receives OFDM signals transmitted form a plurality of base stations, each OFDM signal including the transmission data items multiplexed by using codes, detects the symbol timings of received OFDM signals then measures the reception state of each of the OFDM signals. And the radio communication terminal 102 selects a first base station whose reception condition is the best among the base stations. Furthermore, if there exists, among the base stations other than the first base station, a second base station which is such that the difference between the symbol timing of it and the symbol timing of the first base station is within the given first threshold value, the second station (all of them if there are such a base station with plural number) is selected and the first and second base stations are notified to the base stations. The first and second base stations being selected among the base stations transmit the OFDM signals to the radio communication terminal.

According to the second base station selection processing operations, the radio communication terminal selects the second base station which is such that the difference between the symbol timing of the first base station and that of the second base station is within the first threshold value and also the difference between the reception condition of the first base station and that of the second base station is within the given second value.

According to the third base station selection processing operations, the radio communication terminal further detects the frame timing from each of the received OFDM signals and selects a base station which is such that the difference between the frame timing of the base station and that of the first base station is within the given third threshold value and also the difference between the symbol timing of the base station and that of the first base station is within the first threshold value.

Furthermore, according to the above-described fourth base station selection processing operations, the radio communication terminal does not select a base station other than the first base station and selects the HHO, if exists at least one base station which is such that the difference between the symbol timing of the base station and that of the first base station exceeds the first threshold value.

In this manner, according to the embodiment described above, the radio communication terminal can achieve the hand-over by easy control to select an optimum base station on the basis of the reception conditions and the symbol timing differences of signals from base stations.

### (Second Embodiment)

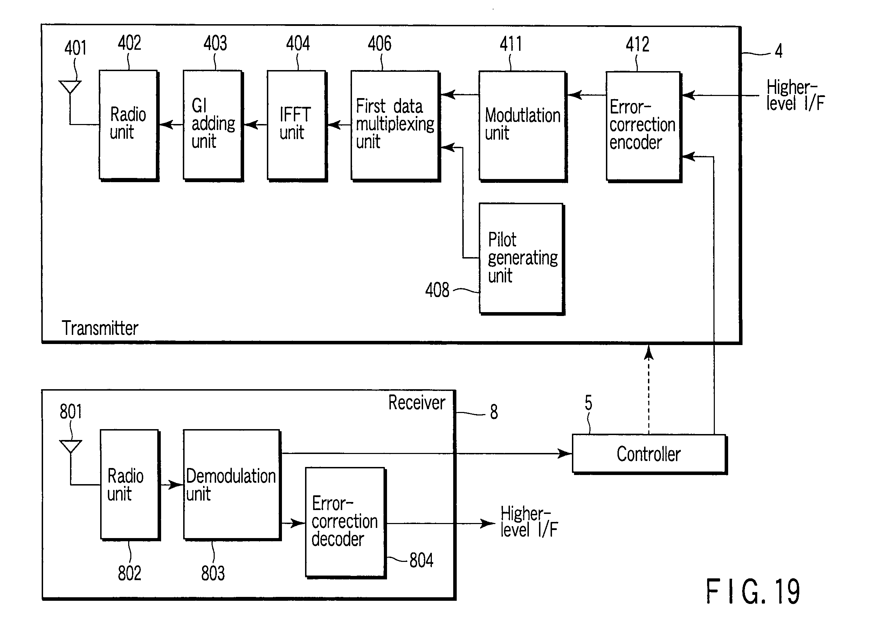

FIG. 19 shows another configuration example of principal parts of the base station (base stations 101-1 and 101-2). It is to be noted that in FIG. 19, the same parts as those of FIG. 4 are denoted with the same reference numerals, and different parts will be described mainly. That is, in the configuration example in FIG. 19, the base station does not include the data divider unit 410, the second code multiplier unit 409 and the second data multiplexing unit 407, which are for code division multiplexing, and the first code multiplier unit 405 for multiplying the code assigned to each base station.

The base station shown in FIG. 19 includes a transmitter 4, a controller 5 and a receiver 8. The transmitter 4 includes an antenna 401, the radio unit 402, a GI adding unit 403, a IFFT unit 404, a first data multiplexing unit 406, a pilot generating unit 408, a modulation unit 411 and an error-correction encoder unit 412. The receiver 8 includes an antenna 801, a radio unit 802, a demodulation unit 803 and an error-correction decoder 804.

Operation of each block of the transmitter 4 of the base station in FIG. 19 will be described. The transmission data item transferred from the higher level I/F (higher-level layer) and the control data item being input from the controller 5 are input to the error-correction encoder 412. The error-correction encoder 412 performs error-correction encoding to the transmission data item and control data item which are input by using the given encoding method and encoding rate, to output to the modulation unit 411.

The modulation unit 411 modulates the transmission data and the control data which are input by using the given modulation method, to output to the first data multiplexing unit 406. The pilot generating unit 408 generates the pilot signal having a given signal pattern and outputs the pilot signal to the first data multiplexing unit 406. The first data multiplexing unit 406 multiplexes the transmission data item and the control data item which are output from the modulation unit 411 with the pilot signal which is output from the pilot generating unit 408, to output to the IFFT unit 404. Hereinafter, the transmission data item, the control data item and the pilot signal are generally referred to as data item.

The IFFT unit 404 performs the IFFT on the data item being input, to output to the GI adding unit 403. The GI adding unit 403 duplicates a part of the data item being input to add it to the front part of the data item (to add guard interval(GI)), and outputs to the radio unit 402. The radio unit 402 performs, on the data item, the given radio processing such as D/A conversion, quadrature modulation, up-conversion, band limitation and power amplification, to generate the radio signal (OFDM signal), and the radio signal being generated is transmitted from the antenna 401.

The controller 5 controls each block of the transmitter 4 and determines whether it is to transmit the transmission data to a radio communication terminal in the hand-over state or not in accordance with the data transmission request which is notified from the radio communication terminal and is included in the data received by the receiver 8. Also, the controller 5 inputs, to the error-correction encoder 412, the control data item indicating the destination (for example, identification information of radio communication terminal) of the transmission data item, and the encoding method, the encoding rate, the modulation method and the like which are to be adopted to the transmission data item.

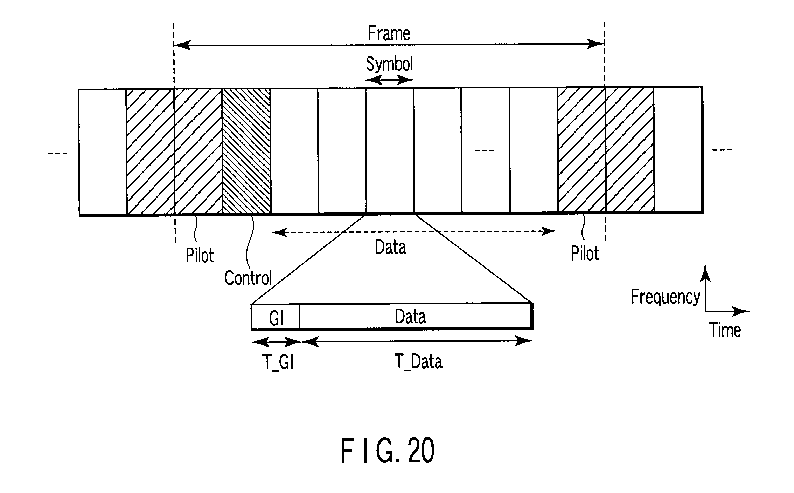

In the first data multiplexing unit 406, the multiplexing method for multiplexing the transmission data item and the control data item which are input from the modulation unit 411 and the pilot signal which is input from the pilot generating unit 408 may be adopted arbitrarily, for example, a method for multiplexing by dividing time as shown in FIG. 20 is usable.

In the receiver 8, the antenna 801 inputs the received radio signal to the radio unit 802. The radio unit 802 performs given radio processing such as band limitation, down conversion, quadrature demodulation, A/D conversion and so on, to output to the demodulation unit 803. The demodulation unit 803 demodulates the signal being input, and outputs the received data being obtained to the controller 7 if the received data has not been error-correction encoded (for example, as mentioned later, data such as information notifying base station being selected by radio communication terminal, which is transmitted from radio communication terminal to each base station in hand-over control). And the demodulation unit 803 outputs the received data being obtained to the error-correction decoder unit 91 if the received data has been error-correction encoded. The error-correction decoder unit 91 outputs the decoded result to the controller 7.

FIG. 20 shows the signal format of the downlink radio channel. The transmission unit of the data is referred to as the symbol, and the frame is composed by multiplexing a plurality of transmission data symbols, control data symbol (CONTROL) including a destination of the transmission data items and a plurality of pilot symbols. In general, the number of the transmission data items included in the frame is larger the number of pilots. Further, One symbol period includes the transmission data item or pilot and the GI (guard interval) which is a copy of a part of the transmission data item or the pilot and added to it. If T_GI represent as the unit time of the GI and T_Data represent as the unit time of the transmission data item or the pilot, generally, the T_GI is around 1/4 to 1/10 of the T_Data. In the format shown in FIG. 20, the pilot symbol is multiplexed at the head and an end of one frame, the control data item is multiplexed at the next to the pilot symbol at the head of the frame and the transmission data symbols is multiplexed next to the control data symbol.

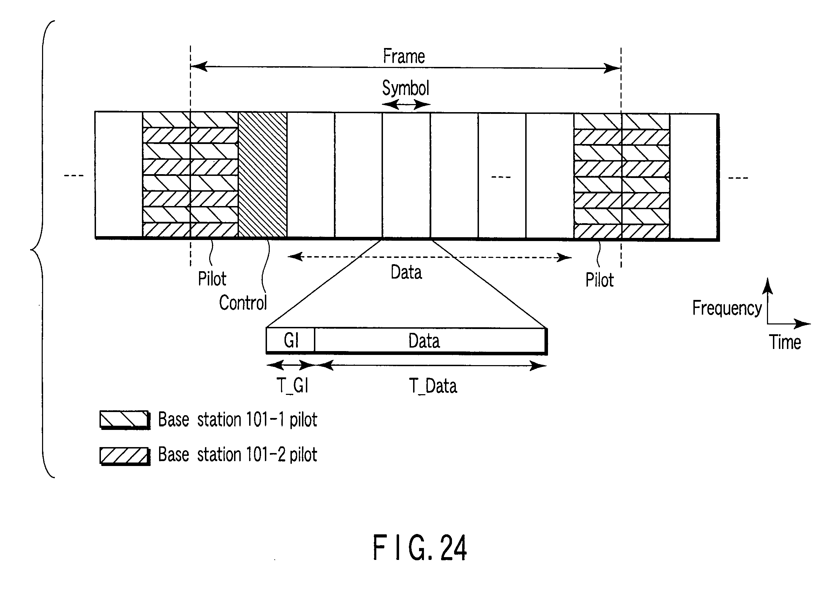

In the signal format shown in FIG. 20, an arbitrary one frame includes the transmission data item addressed to one radio communication terminal. That is, by transmitting the transmission data items addressed to the one radio communication terminal for each one frame period, the base station 101 transmits a plurality of transmission data items addressed to a plurality of radio communication terminals by applying time division multiplexing thereto. Further, for facilitating the differentiation of each base station, likewise the example shown in FIG. 24, the pilot signals of respective base stations (base stations 101-1 and 101-2 in FIG. 24) may be multiplexed in the frequency domain and transmitted.

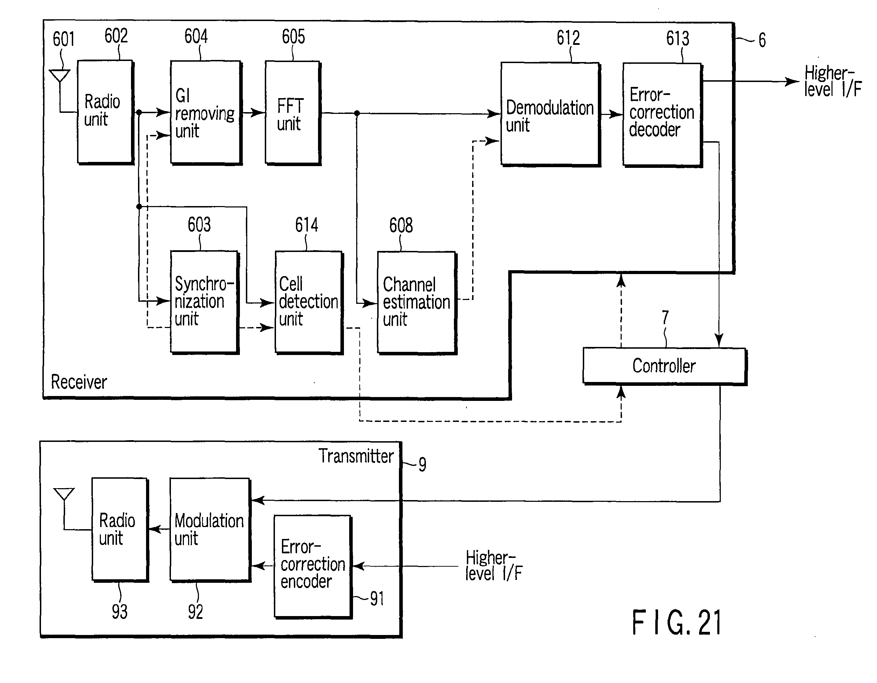

FIG. 21 shows the configuration example of the radio communication terminal in the second embodiment. In FIG. 21, the same parts as those of FIG. 7 are denoted with the same reference numerals, and different parts will be described mainly. That is, the configuration example in FIG. 21 does not includes the data divider unit 607, the second code multiplier unit 609, the combining unit 610, the data merging unit 611 and the first code multiplier unit 606 shown in FIG. 7.

In FIG. 21, the radio communication terminal includes the receiver 6, the controller 7 and the transmitter 9. The receiver 6 is includes the antenna 601, the radio unit 602, the synchronization unit 603, the GI removing unit 604, the FFT unit 605, the channel estimation unit 608, the demodulation unit 612, the error-correction decoder 613 and the cell detection unit 614.

Next, operations of each block of the receiver 6 of the radio communication terminal in FIG. 21 will be described. Here, it is assumed that the signal format of the radio channel shown in FIG. 20 has been in use.

The antenna 601 inputs each radio signal received from each base station to the radio unit 602. The radio unit 602 performs the radio processing such as band limitation, down-conversion, quadrature demodulation, A/D conversion on the each radio signal being input, to output to the synchronization unit 603, the GI removing unit 604 and the cell detection unit 614.

The synchronization unit 603 detects the timings of the symbol and the frame shown in FIG. 20 from the each signal being input, to notify the timings detected to the GI removing unit 604 and the cell detection unit 614. Here, the detection of symbol timing means to detect a synchronous timing indicating boundary position between two transmission symbols and the detection of the timing of the frame means to detect a synchronous timing indicating boundary position between two frames each including the plurality of transmission symbols. The detection of the symbol timing and frame timing performs because multi-carrier demodulation cannot be achieved without inputting, to the FFT unit, an OFDM signal appropriately positioned.

The GI removing unit 604 removes, from each signal being input, the GI which is added by the base station based on the timing notified from the synchronization unit 603 and outputs to the FFT unit 605. The FFT unit 605 performs the FFT on each signal being input, to output to the demodulation unit 612 if the signal is the transmission data item or the control data item, and to output to the channel estimation unit 608 if the signal is the pilot. The channel estimation unit 608 performs channel estimation by using the pilot being input, to notify the estimation result to the demodulation unit 612.

The demodulation unit 612 demodulates the transmission data item and the control data item which are input by using the demodulation method corresponding to the demodulation method, to output to the error-correction decoder 613. The error-correction decoder 613 decodes the transmission data item and the control data item which are input, based on the encoding method and the encoding rate. And the error-correction decoder 613 outputs the transmission data item being encoded to the higher-level I/F, and outputs the control data item being encoded to the controller 7.

The cell detection unit 614 detects, by using the input signals, other base station whose reception state is sufficient to receive the signal transmitted from the other base station and which is not detected by the synchronization unit 603. And the cell detection unit 614 notifies the timing of the symbols and frames (hereinafter referred to as receiving timing) of all detected base stations including the base station detected by the synchronization unit 603 to the controller 7. The received power or the signal-to-interference and noise power ratio of the pilot can be used as the reception condition to be notified.

The controller 7 controls each block of the receiver 6 if the destination of the frame included in the control data item being input corresponds to the radio communication terminal (that is, in the case that the frame includes the transmission data item for the radio communication terminal). Also, the controller 7 determines whether or not the radio communication terminal is in the hand-over state based on the receiving timings and reception states of all base stations notified from the cell detection unit 614 and notifies the determination result to any desired base station thorough the transmitter 9. Furthermore, the controller 7 determines whether performing the SHO or performing the HHO in the case of the hand-over state, and notifies the fact as a data transmission request from the transmitter 9 to a plurality of base stations which are targets of the hand-over state.

To notify that the SHO is performed or the HHO is performed, the radio communication terminal uses the formats shown in FIGS. 8A and 8B or FIGS. 9B and 9C, as described in the first embodiment.

Also, the following procedures and processing and the like are similar to those of the aforementioned first embodiment: the communication control procedures between the radio communication terminal 102 and the base station 101 (here, the base station 1 corresponding to the base station 101-1 and base station 2 corresponding to base station 101-2) shown in FIG. 10, the hand-over control of the radio communication terminal 102 shown in FIG. 11, the processing operations shown in FIG. 12 which is notifying the ID of the base station selected by the base station selection processing in the step S6 in FIG. 11, the base station selection processing in the radio communication terminals shown in FIG. 13 to FIG. 17.

As described above, according to the second embodiment, the hand-over can be achieved with easy control even if the base stations are not synchronized with one another when the orthogonal frequency division multiplexing is adopted as the communication system.

That is to say, the radio communication terminal 102 receives the OFDM signals transmitted from a plurality of base stations, detects the symbol timing of the each of the OFDM signals being received and measures the reception state of each of the OFDM signals. The radio communication terminal 102 then selects the first base station whose reception condition is best among the base stations. Furthermore, if there is, among the base stations other than the first base station, the second base station which is such that the difference between the symbol timing of the second base station and that of the first base station is within the first threshold value, the radio communication terminal 102 selects the second base station (all of them if there are a plurality of such base stations) and notifies both first and second stations to the base stations. The first and the second base stations among the base stations transmit the OFDM signal to the radio communication terminal.

According to the second base station selection processing operation mentioned above, the radio communication terminal selects the second base station which is such that the difference between the symbol timing of the second base station and that of the first base station is within the first threshold value and the difference between the reception condition of the second base station and that of the first base station is within the second threshold value.

According to the third base station selection processing operation mentioned above, the radio communication terminal further detects the frame timing from each of the OFDM signals being received and selects the base station which is such that the difference between the frame timing of the base station and that of the first base station is within the third threshold value and the difference between the symbol timing of the base station and that of the first base station is within the first threshold value.

According to the fourth base station selection processing operation mentioned above, the radio communication terminal does not select any base station other than the first base station but selects the HHO, if exists at least one base station which is such that the difference between the symbol timing of the base station and that of the first base station exceeds the first threshold value.

In this way, according to the aforementioned second embodiment, the radio communication terminal can achieve the hand-over by easy control in such a manner that selects the optimum base station on the basis of the reception conditions of signals from respective base stations and the differences of the symbol timings.

### (Third Embodiment)

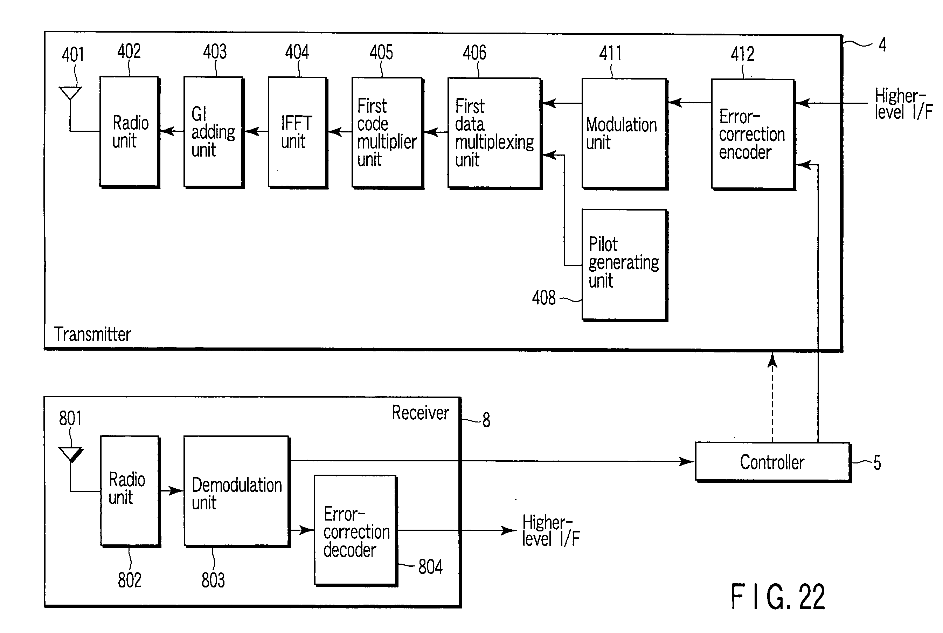

FIG. 22 shows yet another configuration example of principal parts of the base stations (base stations 101-1 and 101-2). In FIG. 22, the same parts as those of FIG. 4 are denoted with the same reference numerals, and different parts will be described mainly. That is, the configuration example in FIG. 22 does not includes the data divider unit 410, the second code multiplier unit 409 and the second data multiplexing unit 407 which are for code division multiplexing shown in FIG. 4. The configuration example in FIG. 22 is the configuration that the first code multiplier unit 405 to multiply the code assigned to each base station is added to the configuration in FIG. 19.

In FIG. 22, the base station includes, mainly, the transmitter 4, the controller 5 and the receiver 8. The transmitter 4 includes the antenna 401, the radio unit 402, the GI adding unit 403, the IFFT unit 404, the first code multiplier unit 405, the first data multiplexing unit 406, the pilot generating unit 408, the modulation unit 411, and the error-correction encoder 412. The receiver 8 included the antenna 801, the radio unit 802, the demodulation unit 803 and the error-correction decoder 804.

Operations of each block of the transmitter 4 of the base station in FIG. 22 will be described. The transmission item data transferred from the higher-level I/F (higher-level layer) and the control data item input from the controller 5 are input to the error-correction encoder 412. The error-correction encoder 412 performs error-correction encoding on the transmission data item and the control data item being input using the given encoding method and the encoding rate to output the encoded data items to the modulation unit 411.

The modulation unit 411 modulates the transmission data item and the control data item using the given modulation method to output the modulated data items to the first data multiplexing unit 406. The pilot generation unit 408 generates the pilot signal having the given signal pattern to output it to the first data multiplexing unit 406.

The first data multiplexing unit 406 multiplexes the transmission data item and the control data item which are output from the modulation unit 411 with the pilot signal output from the pilot generating unit 408 to output to the first code multiplier unit 405. Hereinafter, the transmission data, the control data and the pilot signal are generally referred to as data item.

The code (scramble code represented by pseudo random sequence) corresponding to the base station is assigned in advance to the first code multiplier unit 405, which multiplies the data being input by the assigned scramble code to output to the IFFT unit 404. Different code sequences of the scramble code is used for a different base station.

The IFFT unit 404 performs the IFFT for the data item being input to output to the GI adding unit 403. The GI adding unit 403 duplicates the part of the data item being input to add it at the head of the data item (adds the GI) and outputs to the radio unit 402. The radio unit 402 performs, on the data item being input, the given processing such as D/A conversion, quadrature modulation, up-conversion, band limitation and power amplification to generate the radio signal (OFDM signal) and transmits the generated signal through the antenna 401.

The controller 5 controls each block of the transmitter 4 and also determines whether the transmission data to be transmitted or not in accordance with the data transmission request which is included in the data received by the receiver 8 and is notified from the radio communication terminal in the hand-over state. The controller 5 inputs the control data item including a destination of the transmission data item (for example, identification information of radio communication terminal) and the encoding method, the encoding rate and the modulation method applied to the transmission data to the encoder.

In the first data multiplexing unit 406, the multiplexing method for multiplexing the transmission data item and the control data item which are input from the modulation unit 411 and the pilot signal input from the pilot generating unit 408 may be adopted arbitrarily, and for example, a method for multiplexing by dividing time as shown in FIG. 20 may be used.

The receiver 8 inputs the received radio signal to the radio unit 802. The radio unit 802 performs given radio processing such as band limitation, down-conversion, quadrature demodulation and A/D conversion on the input radio signal to output to the demodulation unit 803. The demodulation unit 803 demodulates the input signal, to obtain a received data item. If the obtained received data item has not been applied the error-correction encoding (for example, as mentioned above, in the hand-over control, data item such as information item which is transmitted to each base station from radio communication terminal and notifies base station selected by radio communication terminal), outputs it to the controller 7. If the obtained received data item has been applied the error-correction encoding, outputs it to the error-correction decoder 91. The decoding result from the error-correction decoder 804 is output to the controller 7.

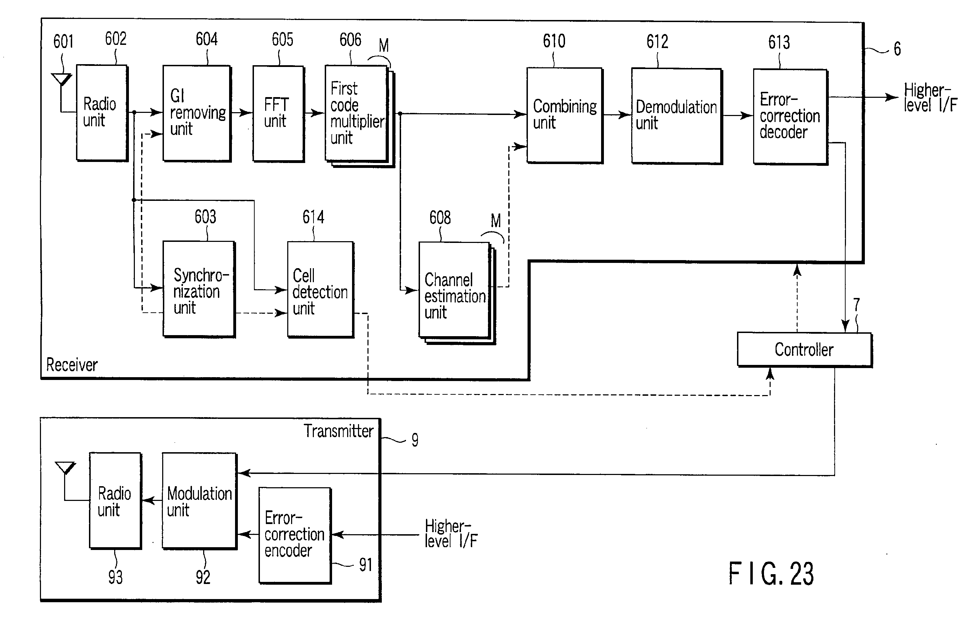

FIG. 23 shows the configuration example of the radio communication terminal in the third embodiment. In FIG. 23, the same parts as those of FIG. 7 are denoted with the same reference numerals, and different parts will be described mainly. That is, the configuration example in FIG. 23 does not include the data divider unit 607, the second code multiplier unit 609, the combining unit 610, and the data merging unit 611. The configuration example in FIG. 23 is the configuration by adding the first code multiplier unit 606 to the configuration in FIG. 21.

In FIG. 23, the radio communication terminal includes the receiver 6, the controller 7 and the transmitter 9. The receiver 6 includes the antenna 601, the radio unit 602, the synchronization unit 603, the GI removing unit 604, the FFT (fast Fourier transform) unit 605, the first code multiplier unit 606, the channel estimation unit 608, the combining unit 610, the demodulation unit 612, the error-correction decoder 613 and the cell detection unit 614.

To perform the SHO in the hand-over state, the first code multiplier unit 606 and the channel estimation unit 608 are provided with M subunits each corresponding to up to each of M base stations from which the radio communication terminal is capable of simultaneously receiving in the SHO. For example, each of the M subunits of the first code multiplexing unit 606 corresponds to each of the base stations and one first code multiplier.

Next, operations of each block of the receiver 6 of the radio communication terminal in FIG. 23 will be described. It is assumed that the signal format of the radio channel sown in FIG. 20 is used here.

The antenna 601 inputs each radio signal from each base station to the radio unit 602. The radio unit 602 performs, on the radio signal being input, the radio processing such as band limitation, down-conversion, quadrature demodulation and A/D conversion and outputs the radio signal being processed to the synchronization unit 603, the GI removing unit 604 and the cell detection unit 614.

The synchronization unit 603 detects the timings of the symbol and the frame shown in FIG. 20 from each signal being input, to notify them to the GI removing unit 604 and the cell detection unit 614. Here, the detection of the symbol timing is to detect the synchronous timing indicating boundary position between two transmission symbols. And the detection of the frame timing is to detect a synchronous timing indicating boundary position between two frames each including the plurality of transmission symbols. The detection of the symbol timing and frame timing performs because multi-carrier demodulation cannot be achieved without inputting, to the FFT unit, an OFDM signal appropriately positioned.

The GI removing unit 604 removes, from the each signal being input, the GIs added by the base station on the basis of the timings notified from the synchronization unit 603 to output the signal being removed the GI to the FFT unit 605. The FFT unit 605 performs the FFT to each of the signals being input to output the signals being performed the FFT to M first code multiplexing subunits of the first code multiplier unit 606 respectively.

The scramble codes, which correspond to a plurality (up to M) base stations respectively from which the radio communication terminal receives, are assigned to M first code multipliers respectively. Each of M first code multipliers multiplies the signal being input by the scramble code which is the same code series as the scramble code by which the first code multiplier unit 405 of the corresponding base station has multiplied. As a result, when the signal is the transmission data item or the control data item, each of the M first code multipliers output the signal being multiplied to the combining unit 610, and when the signal is the pilot, each of the M first code multipliers output the signal being multiplied to the corresponding channel estimation subunit of M channel estimation subunits of the channel estimation unit 608.

Each of M channel estimation subunits of the channel estimation unit 608 performs channel estimation between the radio communication terminal and each base station by using the each pilot from the each base station to notify the estimation result to the combining unit 610.

The combining unit 610 combines a plurality of transmission data items and control data items, namely M series of transmission data items and control data items which are transmitted from a plurality of (up to M) base stations and correspond to the code assigned to the combining unit 610, to obtain a transmission data item being combined and a control data item being combined. The combining unit 610 outputs the transmission data item being combined and the control data item being combined to the demodulation unit 612. In addition, if the radio communication terminal is not in the hand-over state, or in the HHO in the hand-over state, the forgoing combination is not performed.

The demodulation unit 612 demodulates the transmission data item being combined and the control data item being combined by using the demodulation method corresponding to the given modulation method to output the transmission data item and the control data item which are demodulated to the error-correction decoder 613. The error-correction decoder 613 decodes the transmission data item and the control data item which are input by using the given encoding method and the encoding rate, and outputs the transmission data item being error-correction-decoded to higher-level I/F and output the control data item being error-correction-decoded to the controller 7.

The cell detection unit 614 detects, among the base stations except for a base station detected by the synchronization unit 603, other base station which is not detected by the synchronization unit 603, the other base station being such that the reception state of which is sufficient for the radio communication terminal to receive the signal transmitted from the other base station in sufficient receiving performance. And the cell detection unit 614 notify, to the controller 7, the reception state and the timings of the symbol and the frame (hereinafter referred to as reception timing) of each of the base station detected by the synchronization unit 603 and the base stations detected by the cell detection unit 614. The received power or the signal-to-interference and noise power ratio of the pilot can be used as the reception condition to be notified.

The controller 7 controls each block of the receiver 6 if the destination of the frame included in the control data item being input corresponds to the radio communication terminal (namely, the frame includes the transmission data item corresponding to the radio communication terminal). The controller 7 determines whether or not the radio communication terminal is in the hand-over state on the basis of the reception timings and the reception states of all base stations which are notified from the cell detection unit 614 to notify the determination result to a desired base station from the transmitter 9. Moreover, in the case of the hand-over state, the controller 7 determines whether the SHO is to be performed or the HHO is to be performed and transmit, to base stations which are subjects of the hand-over state from the transmitter 9, data transmission requests informing the base stations a determination result.

To notify that the SHO is performed or the HHO is performed, the radio communication terminal uses the formats shown in FIGS. 8A and 8B or FIGS. 9B and 9C, as described in the first embodiment.

Furthermore, the following procedures and processing and the like are similar to those of in the first embodiment: the communication control procedures between the radio communication terminal 102 and the base station 101 (here, the base station 1 corresponding to the base station 101-1 and base station 2 corresponding to base station 101-2) shown in FIG. 10, the hand-over control of the radio communication terminal 102 shown in FIG. 11, the processing operations shown in FIG. 12 which is notifying the ID of the base station selected by the base station selection processing in the step S6 in FIG. 11, the base station selection processing in the radio communication terminals shown in FIG. 13 to FIG. 17.

As described above, according to the third embodiment, the hand-over can be realized with easy control even if the base stations are not in synchronization with one another when the Orthogonal Frequency Division Multiplexing is adopted as the communication method.

That is to say, the radio communication terminal 102 receives the OFDM signals transmitted form the plurality of base stations to detect the symbol timing of each of the OFDM signals and measures the reception states of each of the OFDM signals. The radio communication terminal 102 then selects the first base station whose reception condition is the best among the base stations. Furthermore, if there is, among the base stations other than the first base station, the second base station which is such that the difference between the symbol timing of the second base station and that of the first base station is within the first threshold value, the radio communication terminal 102 selects the second base station (all of them if there are a plurality of such base stations) and notifies both first and second stations to the base stations. The selected first and second base stations among the plurality of base stations transmit the OFDM signals to the radio communication terminal.

According to the second base station selection processing operation mentioned above, the radio communication terminal selects the second base station which is such that the difference between the symbol timing of the second base station and that of the first base station is within the first threshold value and the difference between the reception condition of the second base station and that of the first base station is within the second threshold value.

According to the third base station selection processing operation mentioned above, the radio communication terminal further detects the frame timing from each of the OFDM signals being received and selects the base station which is such that the difference between the frame timing of the base station and that of the first base station is within the third threshold value and the difference between the symbol timing of the base station and that of the first base station is within the first threshold value.

According to the fourth base station selection processing operation mentioned above, the radio communication terminal does not select any base station other than the first base station but selects the HHO, if exists at least one base station which is such that the difference between the symbol timing of the base station and that of the first base station exceeds the first threshold value.

In this way, according to the aforementioned third embodiment, the radio communication terminal can achieve the hand-over by easy control in such a manner that selects the optimum base station on the basis of the reception conditions of signals from respective base stations and the differences of the symbol timings.

The methods described in the embodiments of the present invention (especially, processing operations as shown in FIG. 11, FIG. 12, FIG. 14 to FIG. 17) may be distributed by storing it as a computer executable program in recording medium such as a magnetic disk (flexible disk, hard disk, etc.), an optical disk (CD-ROM, DVD. etc.), and a semiconductor memory.

### Industrial Applicability

The present invention is adequate to a radio communication system which communicates among a plurality of base stations and radio communication terminals using orthogonal frequency division multiplexing (OFDM).

## Claims

1. A Radio communication terminal **characterized by** comprising:
a receiving unit configured to receive orthogonal frequency division multiplexing (OFDM) signals transmitted from a plurality of base stations, respectively;
a first detection unit configured to detect a symbol timing of each of the OFDM signals being received by the receiving unit;
a measurement unit configured to measure a reception condition of each of the OFDM signals being received by the receiving unit, to obtain a plurality of reception conditions corresponding to the base stations respectively;
a first selection unit configured to select, from the base stations, a first base station whose reception condition is the best among the reception conditions;
a second selection unit configured to select, from remaining base stations other than the first base station of the base stations, a second base station which is such that a symbol timing difference between the symbol timing of the second base station and that of the first base station is within a given first time period; and
a notifying unit configured to notify identifications of the first and the second base station to the base stations.

2. The radio communication terminal according to claim 1, **characterized in that** the second selection unit selects the second base station which is such that the symbol timing difference is within the first time period and a reception condition difference between the reception condition of the second base station and that of the first base station is within a given value.

3. The radio communication terminal according to claim 1, **characterized by** further comprising:
a second detection unit configured to detect a frame timing of each of the OFDM signals being received by the receiving unit; and wherein the second selection unit selects the second base station which is such that the symbol timing difference is within the first time period and a frame timing difference between the frame timing of the second base station and that of the first base station is within the second time period.

4. The radio communication terminal according to claim 1, **characterized in that** the second selection unit does not select any base station other than the first base station when there exists, among the base stations, at least one base station which is such that a symbol timing difference between the symbol timing of the one base station and that of the first base station exceeds the first time period.

5. The radio communication terminal according to claim 1, **characterized in that** the first time period is a time period defined based on a guard interval.

6. The radio communication terminal according to claim 3, **characterized in that** the second time period corresponds to an integral multiple of one symbol period.

7. The radio communication terminal according to claim 1, **characterized in that** the OFDM signal transmitted from each of the base station includes a transmission data item addressed to one radio communication terminal for each one frame period.

8. The radio communication terminal according to claim 1, **characterized in that** the OFDM signal transmitted from each of the base stations include a transmission data item being multiplied by a code assigned to the each of the base stations.

9. The radio communication terminal according to claim 1, **characterized in that** the OFDM signal transmitted from each of the base stations include a plurality of transmission data items, each of the transmission data items being multiplied by a code assigned to each radio communication terminal which corresponds to a destination of the each of the transmission data items and then being multiplied by a code assigned to the each of the base stations.

10. A hand-over control method in a radio communication system including a radio communication terminal to receive orthogonal frequency division multiplexing (OFDM) signals transmitted from a plurality of base stations respectively, the method comprising:
receiving the OFDM signals corresponding to the base stations respectively with the radio communication terminal;
detecting a symbol timing of each of the OFDM signals being received;
measuring a reception condition of each of the OFDM signals being received, to obtain a plurality of reception conditions corresponding to the base stations respectively;
selecting, from the base stations, a first base station whose reception condition is the best among the reception conditions;
selecting, from remaining base stations other than the first base station of the base stations, a second base station which is such that a symbol timing difference between the symbol timing of the second base station and that of the first base station is within a given first time period; and
transmitting, to the radio communication terminal, the OFDM signals with the first and the second base stations selected among the base stations.

11. The hand-over control method according to claim 10, **characterized in that** the OFDM signal transmitted from each of the base station includes a transmission data item addressed to one radio communication terminal for each one frame period.

12. The hand-over control method according to claim 11, **characterized in that** the OFDM signal transmitted from each of the base stations include a transmission data item being multiplied by a code assigned to the each of the base stations.

13. The hand-over control method according to claim 10, **characterized in that** the OFDM signal transmitted from each of the base stations include a plurality of transmission data items, each of the transmission data items being multiplied by a code assigned to each radio communication terminal which corresponds to a destination of the each of the transmission data items and then being multiplied by a code assigned to the each of the base stations.

14. A Radio communication terminal **characterized by** comprising:
a receiving unit configured to receive orthogonal frequency division multiplexing (OFDM) signals transmitted from a plurality of base stations respectively, each of the OFDM signals including a transmission data item being multiplied by a code;
a first detection unit configured to detect a symbol timing of each of the OFDM signals received by the receiving unit;
a measurement unit configured to measure a reception condition of each of the OFDM signals received by the receiving unit, to obtain a plurality of reception condition corresponding to the base stations respectively;
a first selection unit configured to select, from the base stations, a first base station whose reception condition is the best among the reception conditions;
a second selection unit configured to select, from remaining base stations other than the first base station of the base stations, a second base station which is such that a symbol timing difference between the symbol timing of the second base station and that of the first base station is within a given first time period; and
a notifying unit configured to notify identifications of the first and the second base station to the base stations.

15. A hand-over control method in a radio communication system including a radio communication terminal to receive orthogonal frequency division multiplexing (OFDM) signals transmitted from a plurality of base stations respectively, each of the OFDM signals including a transmission data item being multiplied by a code; the method comprising:
receiving the OFDM signals corresponding to the base stations respectively with the radio communication terminal;
detecting a symbol timing of each of the OFDM signals being received;
measuring a reception condition of each of the OFDM signals being received, to obtain a plurality of reception conditions corresponding to the base stations respectively;
selecting, from the base stations, a first base station whose reception condition is the best among the reception conditions;
selecting, from remaining base stations other than the first base station of the base stations, a second base station which is such that a symbol timing difference between the symbol timing of the second base station and that of the first base station is within a given first time period; and
transmitting the OFDM signals to the radio communication terminal with the first and the second base stations selected among the base stations.
